(19) Europäisches Patentamt / European Patent Office / Office européen des brevets

(11) **EP 3 471 854 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **17730146.2**

(22) Anmeldetag: **14.06.2017**

(51) Int Cl.:
**B01D 37/02** (2006.01)    **B01D 37/04** (2006.01)
**C12H 1/07** (2006.01)

(86) Internationale Anmeldenummer:
**PCT/EP2017/064542**

(87) Internationale Veröffentlichungsnummer:
**WO 2017/220403 (28.12.2017 Gazette 2017/52)**

(54) **FILTERVERFAHREN, FILTERHILFSMITTEL UND FILTER**

FILTRATION METHOD, FILTERING AID AND FILTER

MÉTHODE DE FILTRATION, AIDE DE FILTRATION ET FILTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2016 DE 102016210972**
**16.01.2017 DE 102017200583**

(43) Veröffentlichungstag der Anmeldung:
**24.04.2019 Patentblatt 2019/17**

(73) Patentinhaber: **Krones AG**
**93073 Neutraubling (DE)**

(72) Erfinder:
• **BECK, Daniela**
**93073 Neutraubling (DE)**
• **ROGGENSTEIN, Walter**
**93073 Neutraubling (DE)**
• **SCHOLZ, Roland**
**93073 Neutraubling (DE)**
• **GROSSER, Angelika**
**93073 Neutraubling (DE)**
• **SCHNEID, Ralph**
**93073 Neutraubling (DE)**
• **ZACHARIAS, Joerg**
**93073 Neutraubling (DE)**
• **NEBEL, Felix**
**93073 Neutraubling (DE)**

(74) Vertreter: **Grünecker Patent- und Rechtsanwälte PartG mbB**
**Leopoldstraße 4**
**80802 München (DE)**

(56) Entgegenhaltungen:
EP-A1- 2 737 942    WO-A1-00/20094
WO-A1-2010/083940   WO-A1-2015/036372
DD-A1- 276 239      DE-A1- 19 804 882
DE-B- 1 261 110     DE-C- 974 446

EP 3 471 854 B1

## Beschreibung

### Gebiet der Erfindung

Die vorliegende Erfindung betrifft ein Verfahren zur Regelung der Porosität eines Filterkuchens eines Anschwemmfilters sowie einen Anschwemmfilter zur Filtration und/oder Stabilisierung von Fluiden, insbesondere von Bier und weiterhin ein Filterhilfsmittel für Anschwemmfilter zur Filtration von Fluiden, wie flüssigen Lebens- und Genussmitteln, insbesondere von Bier, sowie deren Rohstoffen und Zwischenprodukten. Zudem betrifft die Erfindung ein Verfahren zum Filtrieren oder Stabilisieren eines (trüben oder nicht stabilisierten) Bieres mithilfe eines solchen Filterhilfsmittels.

### Hintergrund der Erfindung

Am Ende des Reifungsprozesses weist Bier eine Vielzahl an Hefe- und Trübungspartikeln auf, die insbesondere zur Erfüllung der Verbrauchererwartungen (z. B. Glanzfeinheit) und zum Zweck der Haltbarmachung durch Filtration zu entfernen sind. Hierzu wird das trübe Bier, d. h. das Unfiltrat, mittels einer Filtervorrichtung in ein blankes Filtrat und einen zurückbleibenden Filterrückstand (Filterschicht) getrennt.

Es ist bekannt, Anschwemmfilter, beispielsweise Anschwemmkerzenfilter, für die Filtration oder Stabilisierung von Bier zu verwenden. In einem Filterkessel eines Anschwemmkerzenfilters befindet sich eine Vielzahl von Filterkerzen, die beispielsweise hängend an einer Kopfplatte oder an einem sog. Register befestigt sind. Die Filterkerzen besitzen im Allgemeinen einen Filterkörper, der z. B. einen dünnen Draht aufweist, wobei Spalte zwischen den Drahtwindungen als Durchlässe für das Filtrat dienen. Der gewundene Draht ist entweder selbsttragend oder wird durch einen mit dem gewundenen Draht in Verbindung stehenden Träger gehalten. Zur Filtration werden dem zu filtrierenden Bier Filterhilfsmittel zugesetzt. Die Filterhilfsmittel werden bei Beginn des Filtervorganges an der Außenfläche des Filterkörpers angeschwemmt, so dass eine Anschwemmschicht bestehend aus einer Voranschwemmschicht und einer Sicherheitsschicht ausgebildet wird; dies wird als Grundanschwemmung bezeichnet. Die Voranschwemmung (Phase 1) und die Sicherheitsschicht (Phase 2) können auch als Phase 1 und Phase 2 der Grundanschwemmung bezeichnet werden. Denkbar ist auch, dass die Grundanschwemmung lediglich in einer Phase oder mehr als zwei Phasen erfolgt. Während des Filtrationsvorganges wird dem zu filtrierenden Bier regelmäßig Filterhilfsmittel zudosiert; dies wird als laufende Dosage bezeichnet. Wichtigstes Filterhilfsmittel für die Filtration von Bier ist herkömmlicher Weise kalzinierte Kieselgur. Kalzinierte Kieselgur enthält Cristobalit. Das Einatmen von Cristobalit kann zur Staublunge führen. Auch ist Cristobalit in Staubform als gefährlicher Stoff klassifiziert. Das Hantieren mit Kieselgurstaub muss daher unter Befolgung strenger und aufwändiger Sicherheitsmaßnahmen erfolgen. Zudem wird Kieselgur vor allem durch die Entsorgung zu einem relativ teuren Filterhilfsmittel, da der bei der Filtration entstehende Kieselgurschlamm in einigen Ländern als überwachungspflichtiger Müll entsorgt werden muss.

Andere Filterhilfsmittel werden in der EP 1 243 302 B1 genannt. Insbesondere gab es Versuche, Zellulose als Filterhilfsmittel zu verwenden. In der DE 198 04 882 A1 wird eine handelsübliche natürliche Zellulosefaser beschrieben, die zur Filtration verwendet wurde. Die Form der eingesetzten Zellulose ist eine natürlich belassene Faser. Natürliche Zellulosefasern sind üblicherweise flache Hohlfasern. Im trockenen Zustand sind diese Fasern bändchenförmig und teils verdrillt. Typische Fasern dieser Art sind z B. auch Baumwollfasern für den Textilbereich oder Zellstofffasern für die Papierherstellung. Die Klärwirkung und die Wirtschaftlichkeit dieser Zellulose sind jedoch nicht zufriedenstellend und oftmals kann eine gewünschte Trübung nicht zuverlässig erreicht werden. Zudem kann der Einsatz von Zellulose als Filterhilfsmittel zu einer relative schnellen Verblockung des Filterkuchens führen.

Aus der WO 2015/036372 A1 ist die Verwendung von zellulosischen Regeneratfasern, gegebenenfalls gemischt mit Kieselgur, bekannt. Es können jedoch bei dem Einsatz von zellulosischen Regeneratfasern Probleme hinsichtlich der erzielten Trübung bei der Filtration von Bier auftreten. Insbesondere können eine höher als gewünschte Trübung im Filtrat und eine zu geringe Filterleistung Probleme bereiten. Weitere Anschwemmfilter sind aus WO 2010/083940 A1 und DE 12 61 110 B bekannt.

Es liegt somit der vorliegenden Erfindung eine Aufgabe dahingehend zugrunde, ein zu Kieselgur alternatives Filterhilfsmittel bereitzustellen, das ähnlich gute Filtriereigenschaften aufweist, jedoch gesundheitlich unbedenklich und kostengünstig herzustellen ist.

Auf der Filtratseite eines Filterelements erhöht sich die örtliche Fließgeschwindigkeit je näher man sich am Ablauf befindet. Der Fluss des Filtrates erzeugt einen Sog auf der Unfiltratseite des Filterelements, wodurch das Filterhilfsmittel an der Oberfläche des Elements fixiert wird, und zwar an der Stelle des höchsten Flusses. Ist diese Stelle des Filterelements bedeckt, verlagert sich die örtliche Position des höchsten Flusses und führt auch an der neuen Stelle zu einem Sog und einer Anlagerung des Filterhilfsmittels. Durch diesen Effekt wird nach und nach die komplette Oberfläche des Filterelements mit Filterhilfsmittel bedeckt und bildet somit eine gleichmäßige Anschwemmschicht. Bei kompressiblen Filterhilfsmitteln wird beim Aufbau einer Anschwemmschicht kaum Gegendruck aufgebaut, wie es normalerweise bei den bisher verwendeten Filterhilfsmitteln üblich ist. Dadurch wird der Fluss nicht wie üblich an Stellen mit bedecktem Filterelement reduziert und bei freien Flächen des Filterelements erhöht, sodass sich auf dem Filterelement keine gleichmäßige Filterschicht aufbauen kann.

Eine Schwierigkeit bei der Verwendung kompressibler Filterhilfsmittel während der Filtration ergibt sich durch die Kompressibilität sowohl der Anschwemmschicht als auch der Filterschicht, d. h. des Filterkuchens. Da wie oben erwähnt kompressible Filterhilfsmittel kaum Gegendruck verursachen, muss durch gezielte Erhöhung der Fließgeschwindigkeit eine gewisse Kompression des Filterkuchens erzeugt werden. Erst mit Erreichung einer gewissen Druckdifferenz zeigt ein kompressibler Filterkuchen filtrierende Eigenschaften. Bei weiter zunehmender Fließgeschwindigkeit, d. h. stärkerer Durchströmung des Filterkuchens, wird dieser übermäßig komprimiert, wodurch eine zu große Druckdifferenz zwischen Unfiltratseite und Filtratseite resultiert. Dadurch kann die Filterschicht verblocken, sodass keine ausreichende Filtratleistung mehr erzielt werden kann. Bei noch weiter ansteigender Druckdifferenz können schließlich Trübungspartikel durch die Filterschicht hindurch gedrückt werden oder Durchbrüche in der Filterschicht entstehen, sodass keine sinnvolle Filtration mehr möglich ist.

Üblicherweise wird der Zufluss an Unfiltrat während der Filtration so geregelt, dass eine konstante Filtratleistung, d. h. eine konstante Menge an Filtrat pro Zeiteinheit, erzielt wird. Dies hat jedoch zur Folge, dass die Druckdifferenz über die Filterschicht während des Filtrationsprozesses durch den stetig anwachsenden Filterkuchen kontinuierlich steigt. Während ein solcher Anstieg der Druckdifferenz bei Verwendung von Kieselgur im Allgemeinen kein Problem darstellt, führt er bei Verwendung von kompressiblen Filterhilfsmitteln zu einer über die notwendige Grundkompression (siehe oben) weiterführenden Kompression des Filterkuchens, wodurch die Porosität bzw. Durchlässigkeit des Filterkuchens und damit das Rückhaltevermögen bzw. die Trennschärfe der Filtration beeinflusst werden. In Abhängigkeit von der Feststofffracht im Unfiltrat ergibt sich bei der Regelung auf eine konstante Filtratleistung somit ein unkontrollierter Widerstand im Filterkuchen, was zu einer zu geringen oder zu übermäßigen Kompression führt. Somit ist das Filtrationsergebnis, d. h. die Qualität des Filtrats, nicht steuerbar.

Es liegt somit der vorliegenden Erfindung eine weitere Aufgabe dahingehend zugrunde, ein Verfahren zur Regelung der Porosität eines Filterkuchens, insbesondere mit kompressiblem Filterhilfsmittel, sowie einen Anschwemmfilter zur Verfügung zu stellen, welcher eine Regelung der Porosität des Filterkuchens ermöglicht. Durch die Regelung der Porosität soll eine ausreichend gute Filtratqualität über einen möglichst langen Filtrationszyklus erreicht werden. Ganz allgemein liegt der Erfindung eine Aufgabe dahingehend zugrunde, die Standzeit eines Anschwemmfilters zu verlängern und einen effektiven Einsatz von kompressiblen Filterhilfsmitteln zu ermöglichen.

## Beschreibung der Erfindung

### Filterverfahren und Filter

Die oben genannten Aufgaben werden gelöst durch ein Verfahren zur Regelung der Porosität eines Filterkuchens eines Anschwemmfilters, der mindestens einen Zulauf für Unfiltrat und mindestens einen Ablauf für Filtrat aufweist, gemäß Anspruch 1. Das Verfahren umfasst die folgenden Schritte: Zufuhr eines Stroms von mit Filterhilfsmittel versetztem Unfiltrat über den Zulauf des Anschwemmfilters und Abzug eines Stroms von Filtrat von dem Ablauf des Anschwemmfilters, wobei eine Trübung des abgezogenen Filtrats gemessen wird und mittels einer Steuereinheit mit mindestens einem Grenzwert für die Trübung verglichen wird, und wobei eine Druckdifferenz zwischen Unfiltratseite und Filtratseite des Anschwemmfilters durch Anpassen eines Volumenstroms des zugeführten Stroms mittels der Steuereinheit in Abhängigkeit von einem Ergebnis des Vergleiches der gemessenen Trübung mit dem mindestens einen Grenzwert geregelt wird, z. B. um einen Sollwert für die Trübung zu erreichen. Vorteilhafte Weiterbildungen sind Gegenstand der abhängigen Ansprüche.

Das Verfahren regelt somit die Porosität bzw. Durchlässigkeit des Filterkuchens über eine Änderung der Druckdifferenz durch Änderung des Volumenstroms von zugeführtem Unfiltrat, welches auch zurückgeführtes Filtrat enthalten oder aus solchem bestehen kann, in Abhängigkeit von einer filtratseitig gemessenen Trübung. Anschwemmfilter sind im Stand der Technik hinreichend bekannt und werden daher hier nicht weiter beschrieben. Als Anschwemmfilter können insbesondere Anschwemmkerzenfilter verwendet werden, aber auch Anschwemmscheibenfilter oder Anschwemmschichtenfilter. Die Anschwemmung kann vertikal oder horizontal erfolgen, je nach Anordnung der Filterelemente, d.h. Filterkerzen, -scheiben bzw. -schichten. Die Anschwemmschicht an der Oberfläche der Filterelemente (auf der Unfiltratseite) wird vor der eigentlichen Filtration durch die Grundanschwemmung erzeugt. Während der Filtration wird durch kontinuierliche Zugabe von Filterhilfsmittel permanent ein Filterkuchen auf der Grundanschwemmung erzeugt. Während der Filtration bilden neben dem Filterhilfsmittel auch die abgefilterten Trubstoffe den Filterkuchen. Hier und im Folgenden werden die Begriffe Anschwemmschicht und Filterschicht synonym mit dem Begriff Filterkuchen verwendet. Gemeint ist stets die unfiltratseitige Ablagerung von Filterhilfsmittel und/oder Trubstoffen.

Bei dem zu filtrierenden Fluid kann es sich um trübes oder nicht stabilisiertes Bier, um Wein oder Fruchtsaft (z.B. Apfelsaft) aber auch Zuckerlösungen handeln. Entsprechend umfassen der Begriff Filtration und seine Ableitungen hier und im Folgenden stets auch die Möglichkeit einer (zusätzlichen) Stabilisierung des Fluides. Entsprechend können dem Fluid, insbesondere Bier, anstelle und/oder zusätzlich zu dem Filterhilfsmittel auch Stabilisierungsmittel zugesetzt werden.

Wie bei der Anschwemmfiltration üblich, wird über mindestens einen Zulauf ein Strom von mit Filterhilfsmittel versetztem Unfiltrat auf einer Seite, der Unfiltratseite, des Filterelements des Anschwemmfilters zugeführt und auf der anderen Seite, der Filtratseite, des Filterelements ein Strom von Filtrat nach Durchtritt durch den Filterkuchen über mindestens einen Ablauf des Anschwemmfilters abgezogen. Das abgezogene Filtrat kann beispielsweise zur Verfüllung in Behälter, wie z. B. Getränkeflaschen oder Fässer, weitergeleitet werden oder, wie unten beschrieben, zumindest teilweise zur Unfiltratseite zurückgeführt werden. Entsprechend umfasst der Begriff Unfiltrat hier und im Folgenden stets auch eine Mischung aus trübem Fluid und rückgeführtem Filtrat. Wenn es sich um die Stabilisierung handelt dann ist mit dem Begriff des Unfiltrats das zu stabilisierende Fluid (z.B. Bier) gemeint.

Gemäß dem vorliegenden Verfahren wird die Trübung des Filtrats, beispielsweise unmittelbar am Ablauf des Anschwemmfilters, gemessen und von einer Steuereinheit als Kontrollparameter zur Regelung der Druckdifferenz über den Anschwemmfilter verwendet. Die Trübung des Filtrats kann beispielsweise optisch gemessen werden, z.B. mit einem Streulichtsensor oder einem Durchlichtsensor. Mit Hilfe einer Streulichtmessung kann die Menge der Trubstoffe im Filtrat anhand der rückgestreuten Lichtintensität abgeschätzt werden, wie dies beispielsweise die DE 197 51 180 C1 beschreibt. Die gemessenen Trübungswerte werden kontinuierlich oder in regelmäßigen, definierten Zeitabständen von dem entsprechenden Sensor an eine Steuereinheit des Anschwemmfilters weitergeleitet. Die Zeitabstände können dabei automatisch in Abhängigkeit von dem Trübungsverlauf angepasst werden. Aus den gemessenen Trübungswerten kann zudem der Trübungsverlauf, und insbesondere eine zeitliche Ableitung der Trübung, bestimmt werden. Die Steuereinheit kann dann die gemessenen Trübungswerte und/oder bestimmten Ableitungen automatisch mit mindestens einem Grenzwert für die Trübung oder Ableitung vergleichen.

Die Steuereinheit kann beispielsweise in Form einer mit Display, z.B. Touchscreen, und/oder Eingabeeinheit ausgerüsteten Prozessoreinheit ausgebildet sein, welche zudem eine Speichereinheit aufweisen kann, in der Fluid-spezifische Grenzwerte gespeichert werden können. Beispielsweise können unterschiedliche Grenzwerte für die maximal geduldete Trübung verschiedener Biersorten in Form einer Sortenverwaltung gespeichert werden. Die Grenzwerte können aber auch enger gefasst werden, um eine Sicherheitsmarge zu Trübungen jenseits der akzeptablen Werte vorzusehen. Insbesondere kann mittels eines oberen und eines unteren Grenzwertes ein Intervall um einen Sollwert für die Trübung definiert werden, innerhalb dessen keine Änderung der Druckdifferenz erfolgt. Die Steuereinheit liest die entsprechenden Grenzwerte aus der Speichereinheit und vergleicht die gemessenen Trübungswerte mit diesen Grenzwerten. In Abhängigkeit von dem Ergebnis passt die Steuereinheit, beispielsweise durch Ansteuern einer regelbaren Pumpe für das Unfiltrat, den Volumenstrom an zugeführtem Unfiltrat an, was sich unmittelbar auf die Druckdifferenz zwischen Unfiltratseite und Filtratseite auswirkt. Wird der Volumenstrom erhöht, so steigt automatisch die Fließgeschwindigkeit des durch den Filterkuchen hindurchtretenden Fluids, da der Anschwemmfilter üblicherweise in Dead-End-Filtration betrieben wird. Die erhöhte Fließgeschwindigkeit führt zu einer höheren Druckdifferenz und dadurch zu einer Verdichtung des Filterkuchens, wodurch die Porosität und somit die Permeabilität der Filterschicht (Darcy-Wert) entsprechend sinkt. Als Ergebnis resultiert eine Abnahme der Trübung im Filtrat.

Umgekehrt führt eine Reduzierung des Volumenstroms zu einer Abnahme der Fließgeschwindigkeit und damit auch der Druckdifferenz und einer Entspannung bzw. Auflockerung des Filterkuchens, wodurch die Porosität und somit die Permeabilität zunehmen. Als Ergebnis nimmt die Trübung im Filtrat zu. Die Druckdifferenz über den Filterkuchen kann somit über eine Anpassung des Volumenstroms direkt beeinflusst werden. Insbesondere kann der Volumenstrom solange angepasst werden, bis ein vorgegebener Sollwert für die Druckdifferenz erreicht ist. Diese Anpassung kann automatisch mittels der Steuereinheit erfolgen, wobei ein oder mehrere Drucksensoren zur Bestimmung der Druckdifferenz verwendet werden und eine regelbare Pumpe und/oder regelbare Ventile, wie unten genauer beschrieben, von der Steuereinheit zur Anpassung des Volumenstroms entsprechend angesteuert werden.

Das erfindungsgemäße Verfahren gestattet es somit, die Trübung im Filtrat unmittelbar durch Regelung der Druckdifferenz zu beeinflussen. Insbesondere kann die Druckdifferenz während der Standzeit des Anschwemmfilters derart geregelt werden, dass die Trübung im Filtrat stets unterhalb eines maximal akzeptablen Trübungswerts liegt. Bei 90° Streulichtmessung kann ein solcher Grenzwert beispielsweise bei 1,0 EBC für Helles Bier liegen. Die maximal zulässigen Trübungswerte können dabei abhängig von der jeweiligen Biersorte bzw. dem zu filtrierenden Fluid unterschiedlich sein. Anders als bei der üblichen Anschwemmfiltration wird der Zufluss an Unfiltrat nicht in Abhängigkeit von einer gewünschten Filtratmenge pro Zeiteinheit geregelt, sondern in Abhängigkeit von der gemessenen Resttrübung. Hierdurch kann garantiert werden, dass das Filtrat stets mit akzeptabler Trübung abgezogen wird. Das oben beschriebene Verfahren ist besonders erfolgreich bei Verwendung eines kompressiblen Filterhilfsmittels, beispielsweise eines solchen, welches Viskose und/oder Zellulose umfasst oder aus Viskose und/oder Zellulose besteht. Im Gegensatz zu Kieselgur ist bei Verwendung eines kompressiblen Filterhilfsmittels der gesamte Filterkuchen kompressibel, nicht nur die abgefilterten Trubstoffe. Dadurch kann die Porosität einer Filterschicht aus kompressiblen Filterhilfsmitteln sehr viel stärker durch die oben beschriebene Regelung des Volumenstroms beeinflusst werden.

Die Kompressibilität eines Filterhilfsmittels kann beispielsweise anhand der mathematischen Beschreibung des Filterwiderstandes als Funktion der Feststoff-Pressung gemäß der folgenden Gleichung definiert werden, so wie sie in Abschnitt 8.2.5. des Handbuchs der mechanischen Fest-Flüssig-Trennung von Luckert, K. (2004; Essen: Vulkan-Verlag, Seite 160, Formel 8.62) allgemein für Filterkuchen wiedergegeben ist:

$$\frac{r}{r_0} = \left(\frac{p_S}{p_0}\right)^n$$

Dabei ist $r_0$ der Filterwiderstand beim Druck $p_0$, $p_s$ die Druckbelastung auf das Feststoffgerüst und r der Filterwiderstand des Filterkuchens, somit der Kehrwert der Kuchenpermeabilität $\beta$. Der Exponent n beschreibt die Kompressibilität des Filterkuchens bzw. Filterhilfsmittels (wenn der Kuchen nur aus Filterhilfsmittel besteht). Bezüglich der Details dieser Gleichung sowie deren Herleitung wird auf den oben genannten Abschnitt des Handbuchs verwiesen.

Hier und im Folgenden sind unter kompressiblen Filterhilfsmitteln solche zu verstehen, deren Kompressibilität n im Bereich von 0,025 bis 1,5, bevorzugt im Bereich von 0,4 bis 0,96 liegt. Insbesondere sind kompressible Filterhilfsmittel aus Viskose und/oder Zellulose und solche, die Viskose und/oder Zellulose enthalten, umfasst, deren Kompressibilität n (d.h. ohne Abscheidung von Trubstoffen) im Bereich von 0,025 bis 1,5, bevorzugt im Bereich von 0,4 bis 0,96 liegt.

Kompressible Filterhilfsmittel werden beispielsweise in der WO 2015/036372 A1 beschrieben. Als kompressible Filterhilfsmittel können z.B. zellulosische Regeneratfasern, die aus natürlich vorkommender Zellulose bzw. Zellstoff hergestellt werden, verwendet werden. Die zellulosischen Regeneratfasern können über 98% Zellulose, insbesondere $\alpha$-Zellulose, enthalten. Anhand von klar definierbaren Bedingungen des jeweiligen Herstellungsverfahrens können die Eigenschaften von Zelluloseregeneratfasern, wie z.B. Dicke (Titer), Länge oder auch Querschnittsform gezielt eingestellt werden.

Insbesondere können die zellulosischen Regeneratfasern Viskosefasern, Modalfasern oder Lyocell-Fasern sein, die einen Titerbereich von 0,1 bis 30 dtex, beispielsweise 0,5 bis 2 dtex aufweisen. Die Länge der zellulosischen Regeneratfasern kann weniger als 1 mm, insbesondere 0,01 mm bis 0,9 mm, bevorzugt 0,03 mm bis 0,1 mm betragen. Die Modalfasern weisen eine höhere Festigkeit verglichen mit Viskosefasern auf. Lyocell-Fasern werden durch einen Spinnprozess gewonnen, bei dem Zellstoff in N-Methylmorpholin-N-Oxid (NMMO) aufgelöst wird.

Zellulosische Regeneratfasern können unterschiedliche, beispielsweise durch die Geometrie des Spinndüsenlochs definierbare Querschnitte aufweisen. Das kompressible Filterhilfsmittel kann in Form einer Mischung aus zwei oder mehr verschiedenen Filterhilfsmitteln, beispielsweise zellulosischen Regeneratfasern unterschiedlicher Fasertypen vorliegen. Auch können ansonsten identische Fasern mit unterschiedlichem Titer oder unterschiedlicher Querschnittsform oder unterschiedlicher Länge gemischt werden.

Als kompressibles Filterhilfsmittel können insbesondere Viskosefasern verwendet werden, also Fasern, die nach dem Viskoseverfahren hergestellt werden. Insbesondere kann das Filterhilfsmittel ausschließlich aus Viskose bestehen. Viskosefasern werden aus speziellen Zellstoffen (d.h. Zellstofffasern) hergestellt. Hierzu wird die Zellulose des Zellstoffs durch einen chemischen Prozess (Xanthogenat-Verfahren) in eine in Natronlauge lösliche Form überführt. Die gelöste Zellulose wird schließlich durch definierte Düsen (Spinnlöcher bzw. —kanäle) in ein Fällbad ausgesponnen. Es entsteht je Düsenloch ein endloser Viskosefaden der anschließend gestreckt, gewaschen, nachbehandelt, geschnitten und bei Bedarf getrocknet werden kann. Dadurch können Faserdurchmesser, Faserlänge, Querschnittsform und Oberflächenstruktur direkt im Spinnprozess beeinflusst werden.

Das Filterhilfsmittel kann weitere Materialien, beispielsweise weitere Fasern, umfassen oder vollständig aus zellulosischen Regeneratfasern bestehen. Der Anteil der zellulosischen Regeneratfasern, beispielsweise von Viskose, an dem Filterhilfsmittel kann zwischen 20 % und 100 %, insbesondere zwischen 50 % und 100 % betragen. Für die Filtration bildet sich aus den angeschwemmten Fasern ein Filterkuchen mit einer sekundären Struktur aus den Fasern aus. Denkbar sind auch Filterhilfsmittel, welche Zellulose beinhalten oder komplett aus Zellulose bestehen oder zusätzlich einen inkompressiblen Anteil beinhalten.

Bei Verwendung von kompressiblen Filterhilfsmitteln kann die Grundanschwemmung mit einem stark überhöhten Volumenstrom (z.B. durch Rezirkulation) erfolgen, sodass der Filterkuchen bereits vorkomprimiert wird, um eine ausreichend geringe Porosität zu erreichen. Das Verhältnis dieses anfänglichen Volumenstroms zum Volumenstrom während der eigentlichen Filtration kann etwa 2:1 bis 10:1, insbesondere 2:1 bis 5:1, betragen. Das oben beschriebene Verfahren gestattet es jedoch, auch die eigentliche Filtration bei dem anfänglichen Volumenstrom

(Rezirkulation) fortzusetzen, welcher erst im Laufe der Filtration entsprechend der Ablagerung bzw. Einlagerung von Trubstoffen in der Filterschicht allmählich reduziert oder erhöht wird.

Der Volumenstrom kann insbesondere derart mittels der Steuereinheit angepasst werden, dass eine Druckdifferenz zwischen Filtratseite und Unfiltratseite des Filterelements größer oder gleich einem von Null verschiedenen unteren Grenzwert für die Druckdifferenz ist.

Der besagte Grenzwert kann von der Art des zu filtrierenden Fluids, insbesondere vom Typ des Bieres, abhängen und für jede Filtration individuell ermittelt werden, und in der Speichereinheit in Form einer Sortenverwaltung abgelegt sein, von der die Steuereinheit den entsprechenden Wert ausliest. Für Bier kann der untere Grenzwert beispielsweise im Bereich von 0,5 bar bis 2 bar, bevorzugt im Bereich von 0,8 bar bis 1,5 bar liegen. Zur Regelung der Druckdifferenz kann der Anschwemmfilter über Drucksensoren auf der Unfiltratseite und der Filtratseite verfügen, die die gemessenen Werte an die Steuereinheit übermitteln. Die Filtratseite kann im Wesentlichen drucklos betrieben werden oder, beispielsweise für karbonisierte Getränke, mit einem gewünschten Druck. Hierzu kann eine aktive Druckregulierung auf der Filtratseite erfolgen, indem beispielsweise die abgezogene Filtratmenge durch ein (druck-)geregeltes Ventil gesteuert wird. Die Pumpenleistung für den zugeführten Volumenstrom ist dann dementsprechend groß auszulegen, um die gewünschte Druckdifferenz einstellen zu können.

Die Einregelung einer minimalen Druckdifferenz garantiert eine Mindestkompression der Filterschicht und dadurch eine maximale Porosität und daraus resultierende maximale Resttrübung. Aufgrund der oben beschriebenen trübungsabhängigen Regelung der Druckdifferenz kann die minimale Druckdifferenz derart gering gewählt werden, dass eine noch nicht vollständig ausgebildete, aber für eine Filtration ausreichende Filterschicht garantiert werden kann, welche noch nicht die strengeren Anforderungen an den Sollwert der Resttrübung erfüllt. Dies ist besonders beim Anfahren der Filtration von Vorteil, wo die Filterschicht auf der Anschwemmschicht (zusammen der Filterkuchen) erst aufgebaut wird.

Gemäß einer Weiterbildung kann die Steuereinheit einen Sollwert für die Druckdifferenz erhöhen, wenn die gemessene Trübung über einem oberen Grenzwert liegt. Die Regelung der tatsächlich anliegenden Druckdifferenz auf den (neuen) Sollwert erfolgt dann, indem die Steuereinheit den Volumenstrom des zugeführten Stroms, z.B. über entsprechende Regelung der Pumpe im Zulauf, erhöht. Der obere Grenzwert ist dabei, wie bereits mehrfach erwähnt, abhängig von dem Fluid, insbesondere von dem Typ des zu filtrierenden Bieres, und kann in Form einer Sortenverwaltung in der Speichereinheit der Steuereinheit abgespeichert sein. Der obere Grenzwert kann sich dabei an der maximal zulässigen Trübung im Endprodukt orientieren oder aber um eine Sicherheitsmarge unter der maximal zulässigen Trübung liegen, um stets eine akzeptable Produktqualität zu garantieren. Misst der Trübungssensor einen Trübungswert, der größer als der obere Grenzwert ist, so erhöht die Steuereinheit den Volumenstrom, wodurch die Druckdifferenz über die Filterschicht zunimmt und eine verstärkte Kompression und somit Absenkung der Porosität der Filterschicht erreicht wird. Als Ergebnis sinkt die Trübung wieder unter den oberen Grenzwert. Ist dies der Fall, wird der Volumenstrom (und die Druckdifferenz) bevorzugt nicht weiter erhöht, um eine Verblockung der Filterschicht durch übermäßige Kompression zu vermeiden. Ein oberer Grenzwert für die maximal zulässige Trübung von Bier kann beispielsweise 1,0 EBC bei 90° Streulichtmessung betragen oder 0,2 EBC bei 25° Streulichtmessung betragen. Ein oberer Grenzwert, der die genannte Sicherheitsmarge aufweist, könnte beispielsweise bei 0,7 EBC bei 90° Streulichtmessung liegen.

Entsprechend kann die Steuereinheit den Sollwert für die Druckdifferenz reduzieren, wenn die gemessene Trübung unter einem unteren Grenzwert liegt. Die Regelung der tatsächlich anliegenden Druckdifferenz auf den (neuen) Sollwert erfolgt dann erneut, indem die Steuereinheit den Volumenstrom des zugeführten Stroms absenkt. Auch der untere Grenzwert ist abhängig vom Typ des Fluids und kann in Form einer Sortenverwaltung in der Speichereinheit gespeichert sein. Durch Absenkung des Volumenstroms entspannt sich der Filterkuchen wieder aufgrund der geringeren Druckdifferenz, sodass die Porosität wieder zunimmt, wodurch auch die Trübung im Filtrat zunimmt. Der untere Grenzwert kann dabei beispielsweise 60 % bis 90 %, bevorzugt 70 % bis 80 % des oberen Grenzwertes betragen. Beispielsweise kann für den oberen Grenzwert von 0,7 EBC ein unterer Grenzwert von 0,4 EBC bei 90° Streulichtmessung vorgesehen werden. Durch Absenkung des Volumenstroms bei zu geringer Resttrübung kann in Kombination mit dem oberen Grenzwert eine annähernd konstante Trübung im Endprodukt erzielt werden. Um eine Oszillation der Resttrübung zwischen unteren und oberen Grenzwert zu verhindern, kann die Anpassung der Druckdifferenz mit einem Dämpfungsfaktor erfolgen. Dadurch kann eine stabile Regelung erzielt werden.

Innerhalb einer ebenfalls sortenabhängigen Hysterese, d.h. innerhalb des Intervalls zwischen unterem und oberem Grenzwert für die Trübung, wird der Sollwert für die Druckdifferenz nicht angepasst, sondern belassen. Der Abstand der gemessenen Trübung vom Grenzwert und/oder die zeitliche Ableitung der Trübungswerte (Verlauf der Trübung) können verwendet werden, um die Schrittweite der Anpassung des Sollwerts der Druckdifferenz zu definieren. Sind die Grenzwerte stark überschritten bzw. unterschritten, und/oder wächst bzw. nimmt die Trübung schnell ab, kann die Änderung des Sollwerts entsprechend größer ausfallen. Bei Überschreiten der oberen Grenzwertes kann zudem die Druckdifferenz sprunghaft erhöht werden, indem der Volumenstrom stark erhöht wird. Sinkt die Trübung dann wieder unter den oberen Grenzwert können Volumenstrom und Druckdifferenz wieder teilweise reduziert werden, wobei sie jedoch auch weiterhin über dem ursprünglichen Wert liegen. Alternativ kann die Druckdifferenz durch schrittweises Erhöhen des Volumenstroms langsam erhöht werden, um dann bei Unterschreiten des oberen Grenzwertes auf dem letzten Wert zu verharren.

Gemäß einer Weiterbildung kann die Regelung der Druckdifferenz vollständig durch Erhöhen bzw. Absenken des Volumenstroms des zu filtrierenden Fluids, insbesondere von Bier, erfolgen. In diesem Fall wird somit mehr zu filtrierendes Fluid, beispielsweise von einem Lagertank, über Zuleitungen in den Zulauf zum Anschwemmfilter geführt bzw. gepumpt, wenn die Druckdifferenz erhöht werden soll, bzw. entsprechend weniger zu filtrierendes Fluid zugeführt, wenn die Druckdifferenz gesenkt werden soll. Entsprechend erhöht bzw. reduziert sich der Filtratabzug vom Ablauf des Anschwemmfilters. Hierdurch kann insbesondere anfänglich eine sehr hohe Filterleistung, d.h. ein großer Volumenstrom an abgezogenem Filtrat erreicht werden. Die Variation des zugeführten Volumenstroms an zu filtrierendem Fluid kann mit einer entsprechenden Variation der Menge des zugesetzten Filterhilfsmittels einhergehen.

Alternativ kann die Regelung der Druckdifferenz zumindest teilweise, insbesondere vollständig, durch Rückführen von Filtrat zum Zulauf des Anschwemmfilters erfolgen. Hierdurch kann ebenso eine Erhöhung und/oder Absenkung des Volumenstroms des zugeführten Stroms an Unfiltrat erzielt werden, wobei der Begriff Unfiltrat wie oben erwähnt auch rückgeführtes Filtrat umfasst. Hierzu kann im Ablauf, insbesondere stromabwärts von oben genanntem Trübungssensor, eine Abzweigung, beispielsweise in Form eines regelbaren Drei-Wege-Ventils vorgesehen sein, von welchem eine Rückführleitung für das Filtrat zum Zulauf des Anschwemmfilters abgeht. Durch Regeln des Drei-Wege-Ventils und/oder der regelbaren Pumpe in der Zuführleitung zum Anschwemmfilter kann die Steuereinheit somit die Menge an rückgeführtem Filtrat bestimmen, welche dem zu filtrierenden Fluid im Zulauf beigemischt wird. Dabei kann die Beimischung stromabwärts oder stromaufwärts von der Zugabe des Filterhilfsmittels zum zu filtrierenden Fluid erfolgen. Ein entsprechendes Drei-Wege-Ventil in einer Verzweigung der Rückführleitung kann das Umschalten zwischen den beiden Varianten erlauben.

Die Anpassung des Volumenstroms an Unfiltrat kann teilweise über die Rückführung von Filtrat und teilweise über eine Anpassung des Volumenstroms des zu filtrierenden Fluids wie oben beschrieben erfolgen, oder vollständig durch Rückführen von Filtrat. In beiden Fällen kann das Filtrat teilweise rückgeführt werden. Die Anpassung des Volumenstroms, welche vollständig durch Rückführen von Filtrat erfolgt, hat den Vorteil, dass sie eine verbesserte Kompression des Filterkuchens ermöglicht, ohne die Filterleistung, d.h. die Menge an abgezogenem Filtrat pro Zeiteinheit, zu erhöhen. Ein konstanter Volumenstrom an Filtrat ist beispielsweise von Vorteil, wenn das Filtrat, z.B. Bier, anschließend karbonisiert, geblendet, pasteurisiert oder direkt abgefüllt werden soll.

Die Regelung der Druckdifferenz kann insbesondere solange durch vollständiges Rückführen des Filtrats erfolgen, bis die gemessene Trübung unter dem oberen Grenzwert für die Trübung liegt. Der obere Grenzwert ist dabei abhängig von dem Fluid, insbesondere von dem Typ des zu filtrierenden Bieres, und kann in Form einer Sortenverwaltung in der Speichereinheit der Steuereinheit abgespeichert sein. Der obere Grenzwert kann sich dabei an der maximal zulässigen Trübung im Endprodukt orientieren oder um eine Sicherheitsmarge darunter liegen. In diesem Fall wird also solange kein Filtrat abgezogen, bis die gemessene Trübung wieder akzeptabel ist. Dadurch wird das Abziehen von unzureichend filtriertem Filtrat vermieden. Sinkt die Trübung unter den oberen Grenzwert kann zunehmend Filtrat abgezogen werden, und bei Bedarf der Volumenstrom an zu filtrierendem Fluid entsprechend erhöht werden, um eine ausreichend hohe Kompression zu gewährleisten.

Gemäß einer Weiterbildung kann der Anschwemmfilter weiterhin einen Filterkessel mit einem Unfiltratraum, eine Vielzahl von in dem Unfiltratraum angeordneten Filterelementen, insbesondere Filterkerzen, und wenigstens einen oberen und einen unteren Zulauf für Unfiltrat umfassen, wobei der Strom von mit Filterhilfsmittel versetztem Unfiltrat zumindest zeitweise sowohl über den unteren als auch über den oberen Zulauf zugeführt wird. Alternativ kann der Strom von Unfiltrat zeitweise ausschließlich über den oberen Zulauf, insbesondere abwechselnd über den unteren und den oberen Zulauf, zugeführt werden. Der Filterkessel kann zudem einen Filtratraum umfassen, aus dem das Filtrat abgezogen werden kann. In diesem Fall ist der obere Zulauf für Unfiltrat im oberen Bereich des Unfiltratraums angeordnet.

Filterkerzen können beispielsweise bei einem Anschwemmkerzenfilter in einem Register mit einem Registerablauf für das Filtrat angeordnet sein. Mit einer Zufuhr von Unfiltrat über den oberen und unteren Zulauf lässt sich eine gleichmäßigere Anschwemmung der Anschwemmschicht erreichen. Dabei kann das Verhältnis der Volumenströme über den oberen bzw. unteren Zulauf mittels der Steuereinheit eingestellt werden. Wegen des höheren Auftriebs kompressibler Filterhilfsmittel ist jedoch eine zumindest mehrheitliche Zufuhr über den unteren Zulauf von Vorteil. Die Begriffe "unten" und "oben" sind hier und im Folgenden stets bzgl. einer Aufstellfläche des Anschwemmfilters und somit der Wirkung der Schwerkraft zu verstehen.

Gemäß einer Weiterbildung kann eine Erhöhung des Volumenstroms des zugeführten Stroms nur erfolgen, solange die Druckdifferenz unter einem vorgegebenen maximalen Druckwert liegt. Wie oben beschrieben können hierzu Drucksensoren im Unfiltrat und Filtrat vorgesehen sein, welche ihre Messwerte an die Steuereinheit übermitteln, die daraus die Druckdifferenz zwischen Filtratseite und Unfiltratseite des Anschwemmfilters bestimmt. Durch die erzielte Begrenzung der Druckdifferenz können das zuvor erwähnte Hindurchdrücken von Partikeln durch die Filterschicht und ein lokales Durchbrechen der Filterschicht, welches eine sinnvolle Filtration unmöglich machen würde, verhindert werden.

Die oben genannten Aufgaben werden auch gelöst durch ein Anschwemmfiltersystem zur Filtration und/oder Stabilisierung von Fluiden, insbesondere von Bier, gemäß Anspruch 8. Das Anschwemmfiltersystem ist mit einem Filterkessel mit mindestens einem Zulauf für Unfiltrat, einem Unfiltratraum, mehreren in dem Unfiltratraum angeordneten Filterelementen und mindestens einem Ablauf für Filtrat ausgebildet, wobei das Anschwemmfiltersystem weiterhin eine Messvorrichtung aufweist, die dazu ausgebildet ist, eine Trübung des Filtrats zu messen, und eine Steuereinheit vorgesehen ist, die dazu ausgebildet ist, die gemessene Trübung mit mindestens einem Grenzwert für die Trübung zu vergleichen und eine Druckdifferenz zwischen Unfiltratseite und Filtratseite des Anschwemmfiltersystems durch Anpassen eines Volumenstroms eines über den Zulauf zugeführten Stroms von mit Filterhilfsmittel, insbesondere einem kompressiblen Filterhilfsmittel, versetztem Unfiltrat in Abhängigkeit von einem Ergebnis des Vergleichs der gemessenen Trübung mit dem mindestens einen Grenzwert zu regeln. Vorteilhafte Weiterbildungen sind Gegenstand der abhängigen Ansprüche.

Filterkessel für Anschwemmfilter sind im Stand der Technik wohl bekannt und werden daher hier nicht weiter erläutert. Im Allgemeinen befindet sich der Zulauf für das Unfiltrat dabei am unteren Ende des Filterkessels, wobei das eingebrachte Unfiltrat in einer aufsteigenden Strömung über die Außenflächen der Vielzahl von Filterelemente strömt. Bei einem Filtrationsvorgang wird der Unfiltratraum somit mit Unfiltrat gefüllt. Der Anschwemmfilter kann einen von dem Unfiltratraum durch eine Kopfplatte, in der die Filterelemente münden, getrennten Filtratraum umfassen, in den das Filtrat aus den Filterelementen eintritt. Alternativ kann der Anschwemmfilter einen sogenannten Registerablauf umfassen, wie er beispielsweise aus der EP 1 243 300 B1 bekannt ist. In diesem Fall ist insbesondere kein separater Filtratraum in Form eines Kopfraumes des Filterkessels vorgesehen.

Dieselben Weiterbildungen und Fortführungen, die oben im Zusammenhang mit dem erfindungsgemäßen Verfahren beschrieben wurden, sind dabei ebenso auf das Anschwemmfiltersystem anwendbar. Insbesondere kann die Messvorrichtung einen Trübungssensor aufweisen, der als optischer Sensor, beispielsweise als Durchlicht- oder Streulichtsensor, ausgebildet sein kann. Die Steuereinheit kann als Prozessoreinheit mit einer Speichereinheit, einem Display und/oder einen Eingabegerät, z.B. einem Touchscreen ausgebildet sein. Die Steuereinheit ist dabei dazu ausgebildet, die Druckdifferenz durch Anpassen des Volumenstroms an Unfiltrat wie oben im Detail beschrieben in Abhängigkeit von der gemessenen Trübung im Filtrat zu regeln.

Das Anschwemmfiltersystem kann weiterhin eine regelbare Pumpe im Zulauf umfassen, wobei die Steuereinrichtung dazu ausgebildet ist, eine Pumpleistung der Pumpe zu erhöhen, wenn die gemessene Trübung über einem oberen Grenzwert für die Trübung liegt. Durch Erhöhen der Pumpleistung wird somit mehr Unfiltrat, welches neben dem zu filtrierenden Fluid auch rückgeführtes Filtrat enthalten kann, in den Unfiltratraum eingebracht, wodurch der Druck im Unfiltratraum und damit die Druckdifferenz über den Filterkuchen steigt, was wie oben beschrieben zu einer Absenkung der Trübung führt.

Das Anschwemmfiltersystem kann weiterhin eine Rückführleitung für Filtrat zum Zulauf und ein regelbares Ventil umfassen, das derart ausgebildet ist, dass zumindest ein Teil des Filtrats über die Rückführleitung zum Zulauf zurückgeführt werden kann, wobei die Steuereinheit weiterhin dazu ausgebildet ist, einen Volumenstrom des rückgeführten Filtrats zu erhöhen, wenn die gemessene Trübung über dem oberen Grenzwert liegt. Die Anpassung des Volumenstroms an rückgeführtem Filtrat kann über Ansteuerung des regelbaren Ventils zur Abzweigung eines Teils des Filtrats und/oder Ansteuerung der regelbaren Pumpe im Zulauf erfolgen.

Gemäß einer Weiterbildung kann der Filterkessel wie oben beschrieben wenigstens einen oberen und einen unteren Zulauf für Unfiltrat aufweisen, wobei die Steuereinheit weiterhin derart ausgebildet ist, dass der Strom von mit Filterhilfsmittel versetztem Unfiltrat zumindest zeitweise sowohl über den unteren als auch über den oberen Zulauf oder zeitweise ausschließlich über den oberen Zulauf zugeführt wird. Hierzu kann in der Zulaufleitung eine Verzweigung mit regelbarem Ventil zusammen mit entsprechenden Verbindungsleitungen zu dem oberen bzw. unteren Zulauf vorgesehen sein. Des Weiteren kann der obere Zulauf auch als Ablauf für Unfiltrat verwendet werden, indem eine regelbare Pumpe vorgesehen wird, die Unfiltrat über den oberen Zulauf abzieht. Hierdurch lässt sich dem Unfiltrat eine Grundströmung vom unteren zum oberen Zulauf aufprägen, welche eine Vergleichmäßigung der Dicke der Anschwemmschicht auf der Oberfläche der Filterelemente bewirkt. Dies ist insbesondere bei Verwendung von kompressiblen Filterhilfsmitteln, welche einen höheren Auftrieb im Unfiltrat erfahren, von Vorteil.

Schließlich können die Filterelemente Filterkerzen sein, die jeweils einen Filterkörper, einen im Innenraum des Filterkörpers angeordneten Innenkörper und wenigstens einen zwischen dem Filterkörper und dem Innenkörper gebildeten Filtratkanal aufweisen, wobei der Innenkörper im Wesentlichen rohrförmig ausgebildet ist und wenigstens einen Filtratablauf aufweist und weiterhin an wenigstens zwei Stellen entlang seiner Längsachse umfänglich angeordnete Öffnungen aufweist, die derart ausgebildet sind, dass Filtrat von dem Filtratkanal in einen Innenraum des Innenkörpers eintreten kann.

Filterkerzen für Anschwemmfilter mit einem Filterkörper und einem im Innenraum des Filterkörpers angeordneten Innenkörper sind im Stand der Technik an sich bekannt. Dabei kann der Filterkörper einen spiralförmig gewundenen Draht aufweisen, wobei Spalte zwischen den Drahtwindungen als Fluiddurchlässe dienen. Der gewundene Draht kann entweder selbsttragend sein oder wird durch einen mit dem gewundenen Draht in Verbindung stehenden Träger gehalten. Ein solcher Träger kann beispielsweise in Form von einem oder mehreren Abstandshaltern vorgesehen werden, die zwischen dem Filterkörper und dem Innenkörper angeordnet sind, sodass der den gewundenen Draht umfassende Filterkörper von dem Innenkörper beabstandet ist. Alternativ kann der Innenkörper mit Vorsprüngen, beispielsweise durch einen sternförmigen Querschnitt des Innenkörpers, ausgebildet sein, wobei die Drahtwindungen in Kontakt mit den Vorsprüngen des Innenkörpers angeordnet werden. Eine Vielzahl alternativer Ausbildungen ist denkbar. Entscheidend ist lediglich, dass sich zwischen der Innenfläche des Filterkörpers und der Außenfläche des Innenkörpers ein oder mehrere Filtratkanäle ausbilden, in die das Filtrat nach Durchtritt durch die Anschwemmschicht und den Filterkörper eintritt, und aus denen das Filtrat über einen oder mehrere Filtratabläufe abgezogen werden kann.

Aufgrund der großen Länge von Filterkerzen, die im Bereich von einem halben bis beispielsweise 6 Metern liegen kann, werden sowohl Filterkörper als auch Innenkörper entlang einer Längsachse elongiert ausgebildet, wobei der Filterkörper den Innenkörper entlang dieser Längsachse vollständig umschließt.

Durch Übertritt von Filtrat aus dem Unfiltratraum in den wenigstens einen zwischen dem Filterkörper und dem Innenkörper gebildeten Filtratkanal und durch Abzug des Filtrats aus dem Filtratkanal über wenigstens einen Filtratablauf entsteht in dem Filtratkanal eine Filtratströmung mit einem durch die Form des Filtratkanals, die Filtrationseigenschaften des Filterkörpers mit dem angeschwemmten Filterkuchen und das Strömungsprofil der Unfiltratströmung entlang der Filterkerze bestimmten Strömungsprofil. Bei einer herkömmlichen Filterkerze, bei der sowohl der Innenkörper als auch der Filterkörper rohrförmig mit kreisförmigem, gleichbleibendem Querschnitt konzentrisch entlang der Längsachse ausgebildet sind, steht dem zum Filtratablauf hin zunehmenden Volumenstrom an Filtrat stets der gleiche Querschnitt des Filtratkanals, beispielsweise in Form eines Ringspaltes, zur Verfügung. Aus diesem Grund nimmt bei herkömmlichen Filterkerzen die Geschwindigkeit der Filtratströmung zum Filtratablauf hin zu, wohingegen, insbesondere bei Filterkerzen mit lediglich einem Filtratablauf, ein Stagnationspunkt der Filtratströmung auf der dem Filtratablauf gegenüberliegenden Seite der Filterkerze entstehen kann. Gemäß der Bernoullischen Druckgleichung führt eine erhöhte Strömungsgeschwindigkeit jedoch zu einem reduzierten hydrostatischen Druck der hydrodynamischen Strömung, wodurch die Druckdifferenz über den Filterkörper mit Anschwemmschicht selbst bei vollständig homogener Anschwemmschicht entlang der Längsachse der Filterkerze variiert, was wiederum zu einer unregelmäßigen Anschwemmung des Filterhilfsmittels führt. Bei Anschwemmfiltern mit Filterkerzen ist zudem im Allgemeinen der Filtratablauf der Filterkerzen an deren oberen Enden vorgesehen, wobei das Unfiltrat im Allgemeinen von unten in den Filterkessel eingeführt wird, was zu einer mit zunehmender Höhe im Filterkessel tendenziell stagnierenden Unfiltratströmung führt. Somit stehen sich in dieser Situation gegenläufig zunehmende bzw. abnehmende Strömungsprofile der Filtratströmung im Inneren der Filterkerze und der Unfiltratströmung außerhalb der Filterkerze gegenüber, was die Änderung der Druckdifferenz zusätzlich verstärkt. Durch die unterschiedlichen Sogwirkungen in verschiedenen Bereichen der Filterkerze ist die Belagbildung, d. h. Kuchenausbildung, an gegenüberliegenden Enden des Filterkörpers unterschiedlich stark.

Das Phänomen der unterschiedlich starken Ausbildung der Anschwemmschicht aufgrund der Filtratströmung im Inneren der Filterkerzen ist bei Verwendung von kompressiblen Filterhilfsmitteln mit großen Partikeln, die im Allgemeinen eine geringe Dichte aufweisen, besonders ausgeprägt. Bei Erhöhung der Filtergeschwindigkeit, wie es gemäß der vorliegenden Erfindung zur Regelung der Porosität des Filterkuchens geschieht, wird die Unregelmäßigkeit der Anschwemmschicht aufgrund der höheren Strömungsgeschwindigkeiten in den Filtratkanälen der Filterkerze weiter verstärkt, bis hin zum lokalen Durchbruch der Anschwemmschicht.

Die vorliegende Erfindung versucht, dieses Problem der unterschiedlich starken Ausbildung der Anschwemmschicht zu beheben, indem eine hydrodynamische Optimierung der Strömung auf der Filtratseite vorgenommen wird. Dabei werden erfindungsgemäß der Filterkörper und/oder der Innenkörper derart ausgebildet, dass der Filtratströmung in dem Filtratkanal bei Betrieb der Filterkerze ein Strömungsprofil gegeben wird, das eine Vergleichmäßigung der Anschwemmung eines Filterhilfsmittels an der äußeren Fläche des Filterkörpers bewirkt. Unter einer Vergleichmäßigung der Anschwemmung des Filterhilfsmittels ist hier und im Folgenden eine Verbesserung der Gleichmäßigkeit der Dicke der Anschwemmschicht im Vergleich zur herkömmlichen Filterkerze mit konstantem Querschnitt des Filtratkanals und vollständig geschlossenen Innenkörper zu verstehen. Insbesondere können der Filterkörper und/oder der Innenkörper derart ausgebildet werden, dass die Strömungsgeschwindigkeit des Filtrats und/oder die Volumenstrombilanz über den Filterkörper und/oder die Druckverluste bei Durchtritt durch den Filterkörper bzw. die Sogwirkung der Filtratströmung auf das Unfiltrat entlang der Längsachse der Filterkerze zumindest teilweise ausgeglichen werden. In einem speziellen Fall können der Filterkörper und/oder der Innenkörper derart ausgebildet sein, dass sich ein im Wesentlichen konstantes Strömungsprofil des Filtrats im gebildeten Filtratkanal ergibt. Hierbei umfasst der Begriff "im Wesentlichen" die betriebsbedingten Schwankungen der Filtration der Filterkerze. Alternativ kann das Strömungsprofil der Filtratströmung dem Strömungsprofil des Unfiltrats entlang der Längsachse der Filterkerze angeglichen werden. Insbesondere kann durch geeignete Ausbildung des Filterkörpers und/oder des Innenkörpers ein Entstehen von Stagnationspunkten in der Filtratströmung verhindert werden.

Um das gewünschte Strömungsprofil der Filtratströmung in dem Filtratkanal zu erzielen, kann insbesondere die Form des Filterkörpers und/oder des Innenkörpers entlang der Längsachse der Filterkerze variieren, um einen für den erforderlichen Volumenfluss benötigten Querschnitt des Filtratkanals zu realisieren. Alternativ oder zusätzlich kann der Innenkörper, wie unten detailliert beschrieben, mit Aussparungen vorgesehen werden, durch die das Filtrat in den Innenraum des Innenkörpers geleitet wird, aus dem es über den wenigstens einen Filtratablauf abgezogen werden kann. Durch solche Öffnungen kann dem Filtrat im Filtratkanal die gewünschte Strömung aufgeprägt werden. Auch eine Kombination von variierendem Querschnitt und lokal vorgesehenen Öffnungen im Innenkörper ist denkbar. Der mit Öffnungen versehene Innenkörper muss zur Ausbildung eines inneren Filtratstroms zumindest teilweise hohl ausgebildet werden.

Wie oben erwähnt kann der Innenkörper im Wesentlichen rohrförmig ausgebildet sein und wenigstens einen Filtratablauf aufweisen, wobei der Innenkörper wenigstens an zwei Stellen entlang seiner Längsachse umfänglich angeordnete Öffnungen aufweist, die derart ausgebildet sind, dass Filtrat von dem Filtratkanal in einen Innenraum des Innenkörpers eintreten kann. Gemäß dieser Weiterbildung ist der Innenkörper somit zumindest teilweise als Hohlkörper ausgebildet, wobei der Begriff "im Wesentlichen rohrförmig" hier dahingehend zu verstehen ist, dass der Innenkörper einen entlang seiner Längsachse umfänglich geschlossenen Mantel aufweist, dessen Querschnitt durchaus entlang der Längsachse variieren kann. Insbesondere ist eine Ausbildung des Innenkörpers als im Wesentlichen hohler Konus denkbar. Auch kann der Innenkörper zumindest teilweise derart ausgebildet sein, dass sich sein Querschnitt zu dem Filtratablauf hin erweitert, um ein gleichmäßiges Strömungsprofil der Filtratströmung im Innenraum des Innenkörpers zu erzielen. Hier bedeutet im Wesentlichen hohl, dass der Innenkörper einen Hohlraum aufweist, welcher die entlang seiner Längsachse angeordneten Öffnungen mit einem oder mehreren Filtratabläufen verbindet, über die das in den Innenraum des Innenkörpers eingetretene Filtrat abgezogen werden kann. Dabei kann die Filterkerze mit lediglich einem Filtratablauf, beispielsweise am oberen oder am unteren Ende der Filterkerze, ausgebildet sein oder aber mit zwei Filtratabläufen, d. h. sowohl am oberen als auch am unteren Ende der Filterkerze. Das Abziehen des Filtrats erfolgt dabei nicht unmittelbar aus dem Filtratkanal, sondern indirekt aus dem von dem Hohlraum gebildeten Innenraum des Innenkörpers. Dazu kann der Filtratkanal insbesondere an beiden Enden der Filterkerze verschlossen sein.

Gemäß dieser Weiterbildung weist der ansonsten geschlossene Mantel des Innenkörpers an wenigstens zwei Stellen entlang seiner Längsachse umfänglich angeordnete Öffnungen auf. Dabei können diese Öffnungen beispielsweise lochförmig oder schlitzförmig ausgebildet sein. Die Öffnungen können entlang des Umfangs des Innenkörpers in regelmäßigen Abständen angeordnet sein oder aber unregelmäßig verteilt sein. Entscheidend ist, dass Öffnungen, durch die das Filtrat aus dem wenigstens einen Filtratkanal in den Innenraum des Innenkörpers eintreten kann, lediglich im Bereich von zwei oder mehr vorgegebenen Stellen entlang der Längsachse des Innenkörpers angeordnet sind. Somit bildet sich in dem Filtratkanal ein Strömungsprofil aus, mit dem durch den Filterkörper hindurchtretendes Filtrat von den Stellen, an denen es durch den Filterkörper hindurchtritt, zu den Öffnungen im Mantel des Innenkörpers strömt.

Die Öffnungen können insbesondere derart an bestimmten Stellen entlang der Längsachse des Innenkörpers vorgesehen werden, dass eine Stagnation der Filtratströmung im Filtratkanal aufgrund eines einseitigen Abzugs des Filtrats aus der Filterkerze vermieden werden kann. Weiterhin können eine Anzahl und/oder Größe der Öffnungen derart entlang der Längsachse des Innenkörpers variieren, dass das die Anschwemmung vergleichmäßigende Strömungsprofil in dem Filtratkanal gebildet wird. Als Öffnungen sind beispielsweise Schlitze, Ellipsen, Kreise, Rechtecke, usw. denkbar. Weiterhin kann die Gesamtfläche der Öffnungen an einer Stelle entlang der Längsachse des Innenkörpers umso größer sein, je weiter die Stelle von dem wenigstens einen Filtratablauf entfernt ist. Weiterhin kann der Innenkörper ein oder mehrere verjüngende Elemente und/oder unterschiedliche Querschnitte in seinem Innenraum aufweisen, die derart ausgebildet sind, dass sie einen Querschnitt des Innenkörpers im Bereich der Öffnungen oder unmittelbar stromaufwärts der Öffnungen verjüngen. Eine unmittelbar stromaufwärts gelegene Anordnung dieser verjüngenden Elemente ist hierbei im Hinblick auf die jeweilige lokale Strömungsrichtung des Filtrats im Innenraum des Innenkörpers zu verstehen. Durch Vorsehen der verjüngenden Elemente kann der Querschnitt des Innenkörpers im Bereich der Öffnungen bzw. unmittelbar stromaufwärts der Öffnung reduziert werden, sodass der hydrostatische Druck der Filtratströmung in diesem Bereich reduziert wird. Durch den so erzeugten Widerstand in der Filtratströmung im Innenraum des Innenkörpers kann ein Venturieffekt erzielt werden, wodurch eine Sogwirkung an den entsprechenden Öffnungen bewirkt wird, durch welche Filtrat aus dem Filtratkanal durch die Öffnungen in den Innenraum gesaugt wird. Die verjüngenden Elemente unterstützen somit den Transport von Filtrat aus dem Filtratkanal in den Innenraum des Innenkörpers an den dafür vorgesehenen Stellen. Durch entsprechende Dimensionierung der verjüngenden Elemente bzw. des Querschnitts des Innenkörpers lässt sich damit das Strömungsprofil des Filtrats im Filtratkanal wie gewünscht beeinflussen.

Die beschriebenen Weiterbildungen von Filterkerzen gestatten es, eine vorteilhafte Filtratströmung im Inneren der Filterkerzen zu erzeugen, die gemäß der Bernoulli-Gleichung eine entlang der Filterkerze im Wesentlichen konstante Druckdifferenz zwischen Unfiltrat und Filtrat bewirken. Als Resultat können die oben beschriebenen Verfahren zur Regelung der Porosität der Filterschicht über Steuerung des Volumenstroms an Unfiltrat ohne Einschränkung eingesetzt werden, was zu einer deutlichen Verbesserung des Filtrationsergebnisses führt.

Die beschriebenen Verfahren und Anschwemmfilter ermöglichen eine gezielte Regelung der Porosität des Filterkuchens in Abhängigkeit von der Filtrattrübung und gestatten es daher, das Überschreiten einer maximal zulässigen Resttrübung wirksam zu vermeiden. Das Endprodukt hat somit über den gesamten Filtrationszyklus eine gleichbleibende Qualität im Hinblick auf verbleibende Trubstoffe. Zudem kann der Volumenstrom an Filtrat gezielt an die benötigte Kompression des Filterkuchens angepasst werden, wodurch eine lange Standzeit des Filters und eine hohe Filterleistung erzielt werden. Die beschriebenen Verfahren und Filter lassen sich dabei besonders wirksam in Verbindung mit kompressiblen Filterhilfsmitteln einsetzen, da die Dicke von Filterkuchen aus kompressiblen Filterhilfsmitteln besonders sensibel auf Änderungen der Druckdifferenz über den Filterkuchen reagiert. Speziell geformte Filterkerzen ermöglichen hierbei den Einsatz von kompressiblen Filterhilfsmitteln auch bei stark variierenden Filtergeschwindigkeiten.

**Anschwemmfiltration mit einem Filterhilfsmittel**

Die vorliegende Anmeldung stellt auch ein Filterhilfsmittel zur Verfügung, das sowohl Zellulosefasern als auch Viskosefasern umfasst. Als Zellulosefasern werden hier Fasern aus natürlich vorkommender Zellulose bezeichnet. Viskosefasern werden über gezielte physikalische und chemische Modifikationsprozesse aus natürlich vorkommender Zellulose zu Regeneratfasern hergestellt und unterscheiden sich somit maßgeblich von den natürlichen Zellulosefasern. Die Viskosefasern können bis auf Unreinheiten, beispielsweise geringste Mengen an Hemizellulosen und Restlignin, vollständig aus Zellulose bestehen. Somit können die Viskosefasern über 98 %, insbesondere über 99 % bzw. über 99,5 %, Zellulose, insbesondere $\alpha$-Zellulose, enthalten. Die Viskosefasern können Fasern im Titerbereich von 0,1 bis 30 dtex umfassen.

Hier und im Weiteren umfasst der Begriff Filterhilfsmittel sowohl Hilfsmittel zum Filtrieren als auch Hilfsmittel zum Stabilisieren eines Fluids, insbesondere von Bier. Für die Filtration bildet sich aus den angeschwemmten Fasern ein Filterkuchen aus. Die Entsorgung des Filterkuchens kann unbedenklich als normaler Hausmüll erfolgen, oder insbsondere in einem Faulturm in einer Kläranlage oder in einer Biogasanlage zur Energiegewinnung verwertet werden.

Beispielsweise kann das Filterhilfsmittel für Anschwemmkerzenfilter, Anschwemmscheibenfilter, Anschwemmrahmenfilter oder Horizontalfilter zur Filtration oder Stabilisierung von Getränken, beispielsweise zur Bierfiltration oder -stabilisierung, verwendet werden. Die Scheiben, Kerzen oder Rahmen können dabei horizontal oder auch vertikal angeordnet sein.

Das Filterhilfsmittel kann zumindest zu 90% oder 95 % oder 98 % oder im Wesentlichen (bis auf Verunreinigungen) vollständig aus Zellulosefasern und Viskosefasern bestehen. Es ist erfindungswesentlich, dass diese beiden Faserarten das Filtrierverhalten des Filterhilfsmittels bestimmen.

Experimente haben gezeigt (siehe auch die detaillierte Beschreibung unten), dass mithilfe von Zellulosefasern und Viskosefasern als Bestandteile des Filterhilfsmittels eine effiziente Bierfiltration mit stabiler Kontrolle des Trübungsgrades möglich ist, wobei dieses Filterhilfsmittel insbesondere anstelle von Kieselgur zur Filtration mithilfe herkömmlicher Anschwemmfilter verwendet werden kann. Jahrgangsbedingte Schwankungen der Qualität von Rohstoffen (z. B. Eiweißfraktionen oder Glucangehalte) können zu unterschiedlichen Filtrierbarkeiten der daraus hergestellten Biere führen, was sich in der Trübung des Filtrats oder in der Filtrationsleistung (hl/h) ausprägen kann. Durch die Anwendung des erfindungsgemäßen Filterhilfsmittels kann diese unterschiedliche Filtrierbarkeit leicht kompensiert werden, und es kann eine stabile gewünschte Trübung im Filtrat auch für unterschiedlichste Hefezellzahlen (übliche Hefezahlen von maximal 2 Millionen pro Milliliter, erhöhte Hefezahlen bis zu 5 Millionen pro Milliliter, stark erhöhte Hefezahlen von 6 bis 18 Millionen pro Milliliter und extrem hohe Hefezahlen von 20 bis 24 Millionen pro Milliliter und darüber) im Unfiltrat erreicht werden. Insbesondere haben sich in den Experimenten beispielsweise einer oder mehrere der folgenden Parameterbereiche als vorteilhaft erwiesen, aus denen der Fachmann je nach konkreter Aufgabenstellung auswählen kann. Der Anteil der Zellulosefasern an dem Filterhilfsmittel wird zu 60 % bis 95 %, insbesondere 75 % bis 85 % gewählt. Die Zellulosefasern weisen eine durchschnittliche Faserlänge von weniger als 20 $\mu$m, insbesondere von zwischen 15 $\mu$m und 20 $\mu$m, auf. Die verwendeten Zellulosefasern können Durchmesser von 1 $\mu$m bis 15 $\mu$m oder 45 $\mu$m aufweisen. Die Viskosefasern weisen eine durchschnittliche Faserlänge von zwischen 50 $\mu$m und 300 $\mu$m auf. Die verwendeten Viskosefasern können Durchmesser von 1 $\mu$m bis 20 $\mu$m oder 45 $\mu$m aufweisen.

Hinsichtlich der in dieser Anmeldung genannten Faserlängen ist das folgende zu beachten. Die Zellulosefasern und Viskosefasern können jeweils eine Mischung aus Mischungskomponenten sein. Jede Mischungskomponente wird im Allgemeinen für sich Fasern unterschiedlicher Faserlänge gemäß einer Partikelverteilung aufweisen. Aus dieser Partikelverteilung lässt sich eine nominale mittlere Faserlänge dieser Mischungskomponente bestimmen. Beispielsweise kann die nominale mittlere Faserlänge einer Anzahlverteilung Q0, einer Volumenverteilung Q3 oder einer Massenverteilung Q4 bestimmt werden. Die in dieser Anmeldung genannten durchschnittlichen Faserlängen können insbesondere auf der Grundlage von nominalen mittleren Faserlängen bestimmt sein, die aus Anzahlverteilungen Q0 der jeweiligen Fasern der Mischungskomponente ermittelt worden sind.

Die hier genannten durchschnittlichen Faserlängen der Viskosefaser (Zellulosefasern) bestimmen sich aus den nominalen mittleren Faserlängen der Viskosemischungskomponenten (Zellulosemischungskomponenten) und dem Mischungsanteil der jeweiligen Viskosemischungskomponenten (Zellulosemischungskomponenten). Wird also beispielsweise für die Viskosefasern des Filterhilfsmittel eine Mischung aus zwei Viskosemischungskomponenten x und y mit dem Mischungsanteilen 1 : 1 und der nominalen mittleren Faserlänge lx der Viskosemischungskomponente x und der nominalen mittleren Faserlänge ly der Viskosemischungskomponente y verwendet, resultiert eine durchschnittliche Faserlänge der Viskosefasern des Filterhilfsmittels von (lx + ly) / 2. Wird beispielsweise für die Zellulosefasern des Filterhilfsmittel eine Mischung aus drei Zellulosemischungskomponenten a, b und c mit dem Mischungsanteilen 3 : 2 : 1 und der nominalen mittleren Faserlänge la der Zellulosemischungskomponente a, der nominalen mittleren Faserlänge lb der Zellulosemischungskomponente b und der nominalen mittleren Faserlänge lc der Zellulosemischungskomponente c verwendet, resultiert eine durchschnittliche Faserlänge der Zellulosefasern des Filterhilfsmittels von (3 la + 2 lb + lc) / 3. Wird für die Viskosefasern (Zellulosefasern) nur eine Komponente verwendet, ist die durchschnittliche Faserlänge der Viskosefasern (Zellulosefasern) die nominale mittlere Faserlänge der Komponente.

Je nach konkreter Anwendung hat sich der genannte Anteil der Viskosefasern oder eine der genannten Faserlängen als vorteilhaft insbesondere hinsichtlich der Filterleistung und/oder der erreichten Trübung erwiesen. Die für das Filterhilfsmittel verwendeten Zellulosefasern können alle von derselben Länge sein, oder sie können eine Mischung von Fasern verschiedener Längen, beispielsweise zwei oder drei verschiedener Längen, sein. Dasselbe gilt für die Viskosefasern. Beispielsweise können zweierlei Sorten von Zellulosefasern unterschiedlicher Faserlänge in einem Verhältnis von 1:1 bis 5:1 die Zellulosefasern des Filterhilfsmittels bilden. Ebenso können beispielsweise zweierlei Sorten von Viskosefasern unterschiedlicher Faserlänge in einem Verhältnis von 1:1 bis 5:1 die Viskosefasern des Filterhilfsmittels bilden. Eine Kombination der oben genannten Parameter kann ebenfalls vorteilhaft sein. Ebenso ist denkbar mehr als zwei Sorten von Zellulosefasern und Viskosefasern zu mischen.

Weiterhin wird ein Anschwemmkerzenfilter, insbesondere zum Filtrieren oder Stabilisieren von Bier, mit einem Unfiltratraum eines Filterkessels, mindestens einer Filterkerze (im Allgemeinen mit mehreren Filterkerzen) und einem an der Filterkerze ausgebildeten Filterkuchen, der das Filterhilfsmittel gemäß einem der oben beschriebenen Beispiele umfasst oder aus diesem Filterhilfsmittel besteht, bereitgestellt. Es kann auch ein anderer Anschwemmfilter, beispielsweise eine Horizontalfilter, mit einem anderen Filterelement anstelle des Anschwemmkerzenfilters bereitgestellt werden. Der Anschwemmfilter kann einen Zulauf für das Unfiltrat und einen Ablauf für einen Teil des Unfiltrats aus dem Unfiltratraum aufweisen, wobei der Ablauf mit dem Zulauf für das Unfiltrat verbunden sein kann, sodass über eine entsprechende Pumpeinrichtung ein Kreislaufbetrieb ermöglicht wird. Insbesondere kann der Anschwemmfilter mehrere Filterkerzen aufweisen, an denen jeweils ein Filterkuchen aus dem genannten Filterhilfsmittel ausgebildet ist, und die Filterkerzen können in ein entsprechend vorgesehenes Register münden, in dem mehrere Filterelementabläufe der Filterkerzen über Rohrsysteme zusammengefasst sind und über welches das Filtrat aus den Filterkerzen abgeleitet werden kann.

Es wird zudem zur Lösung der oben genannten Aufgabe ein Verfahren zum Filtrieren oder Stabilisieren eines (trüben oder nicht stabilisierten) Bieres (oder anderen Unfiltrats) gemäß Anspruch 13 bereitgestellt. Das Verfahren umfasst die Schritte des Bereitstellens eines Anschwemmfilters (beispielsweise des oben genannten Anschwemmfilters), Anschwemmens eines Filterhilfsmittels gemäß einem der oben beschriebenen Beispiele an ein Filterkörper (einen Filterelement wie etwa eine Filterkerze oder Filterrahmen) des Anschwemmfilters zum Bilden einer Filterschicht und Leiten des Bieres (oder des anderen Unfiltrats) durch die gebildete Anschwemmfilterschicht. Die Parameter des Filterhilfsmittels können wie oben beschrieben gewählt werden. Das Filtrieren des Bieres kann ein Versetzen des Bieres mit dem Filterhilfsmittel umfassen. Während des Vorgangs der Filtration kann die laufende Dosage angepasst werden. Sowohl kann die Menge als auch die Zusammensetzung des Filterhilfsmittels dynamisch geändert werden. Vorteilhafte Weiterbildungen sind Gegenstand der abhängigen Ansprüche.

Das Verfahren kann den Schritt des Grundanschwemmens der Filterhilfsmittel mit einer gesamten Grundanschwemmmenge von 500 g/m$^2$ bis 2100 g/m$^2$, insbesondere 1700 g/m$^2$ bis 1900 g/m$^2$ umfassen. Diese Grundanschwemmmenge kann insgesamt (für den gesamten Filterkessel) beispielsweise sowohl für eine Filterkerze als auch für einen Filter mit mehreren Filterkerzen Verwendung finden. Insbesondere wenn mehr Kerzen vorhanden sind, kann die Anschwemmmenge pro Filterfläche reduziert werden, da dann eine homogenere Verteilung des Filterhilfsmittels im Unifiltratraum möglich ist.

Die Fließgeschwindigkeit durch die Filterschicht (ein Volumenstrom durch die Filterfläche, z. B. einer Filterkerze) kann oberhalb von 5 hl/(m$^2$h), vorteilhafterweise oberhalb von 10 hl/(m$^2$h), insbesondere zwischen 10 hl/(m$^2$h) und 30 hl/(m$^2$h) liegen. Als Startbedingung zu Beginn der Filtration kann die Fließgeschwindigkeit vorteilhafterweise jedoch oberhalb von 180 hl/(m$^2$h), insbesondere oberhalb von 200 hl/(m$^2$h), insbesondere zwischen 200 hl/(m$^2$h) und 260 hl/(m$^2$h) und weiterhin insbesondere zwischen 220 hl/(m$^2$h) und 240 hl/(m$^2$h), liegen. Bei konstanter Filterleistung wird die Fließgeschwindigkeit durch den Filterkuchen bei der Verwendung von mehr Filterkerzen in dem Anschwemmfilter, falls dieser als Anschwemmkerzenfilter ausgebildet ist, geringer sein als bei der Verwendung von weniger Filterkerzen.

Durch die besondere Eigenschaft des Filterhilfsmittels kann bei einer Reduzierung der Fließgeschwindigkeit durch den Filterkuchen die Anschwemmmenge reduziert werden. Dieser Effekt verstärkt sich zusätzlich bei einer höheren Anzahl von Kerzen (bzw. allgemein gesprochen bei einer Erhöhung der Filterfläche) im Unfiltratraum des Filters.

Die Fließgeschwindigkeit durch die Filterschicht der Kerze kann zu einem durch Zuführung eines bestimmten Unfiltratsvolumenstromes erfolgen oder zum anderen durch Rückführung von Filtrat in den Unfiltratzulauf des Filters, oder eine Kombination hieraus.

Die Zulaufgeschwindigkeit des Unfiltrats kann im Verlauf des Filter-/Stabilisationsprozesses angepasst werden, beispielsweise erhöht werden, wenn der Filterkuchen zu durchlässig wird. Alternativ kann die Rückführung von Filtrat in den Unfiltratzulauf variiert, beispielsweise erhöht, werden. Die genannten Verfahrensparameter können in Kombination miteinander und in Kombination mit den oben beschriebenen Parametern des Filterhilfsmittels gewählt werden.

Es kann eine Grundanschwemmung mit einer ersten Phase mit einer Anschwemmmenge des Filterhilfsmittels von unterhalb von 300 g/m$^2$ oder 1000 g/m$^2$ und mit einer nachfolgenden zweiten Phase mit einer Anschwemmmenge des Filterhilfsmittels von unterhalb von 400 g/m$^2$ oder 1100 g/m$^2$ erfolgen. In der ersten Phase kann die durchschnittliche Faserlänge der Viskosefasern des Filterhilfsmittels größer als in der zweiten Phase sein. Das Mischungsverhältnis von Viskosefasern zu Zellulosefasern kann in der ersten Phase der Grundanschwemmung und in der zweiten Phase der Grundanschwemmung und ebenfalls während der laufenden Zudosage dasselbe sein.

Das erfindungsgemäße Verfahren zum Filtrieren oder Stabilisieren von Bier kann mithilfe einer Mischung von Viskosefasern und Zellulosefasern erfolgen, die in Anhängigkeit von der Anzahl der Hefezellen im Unfiltrat gewählt wird. So kann die durchschnittliche Faserlänge der Viskosefasern und Zellulosefasern in Abhängigkeit von der Anzahl der Hefezellen gewählt werden. In den oben genannten Beispielen des erfindungsgemäßen Verfahrens können, wenn das zu filtrierende oder zu stabilisierende Bier weniger als 5 Millionen Hefezellen pro Milliliter aufweist, die Viskosefasern eine durchschnittliche Faserlänge von weniger als 100 $\mu$m aufweisen. Wenn hingegen das zu filtrierende oder zu stabilisierende Bier mehr als 7 Millionen Hefezellen pro Milliliter aufweist, können die Viskosefasern eine durchschnittliche Faserlänge von mehr als 200 $\mu$m aufweisen. In beiden Fällen können die Zellulosefasern eine durchschnittliche Faserlänge von 15 bis 20 $\mu$m aufweisen. Der Anteil der Zellulosefasern an dem Filterhilfsmittel kann 75 % bis 85 % betragen.

Der Prozess des Filtrierens/Stabilisierens kann allgemein mit einem trübungs- und/oder einer leistungsabhängig verschieden dosierten und zusammengesetzten Filterhilfsmittel erfolgen. Gemäß einer Weiterbildung umfasst der Prozess des Filtrierens/Stabilisierens eine erste Filtrationsphase, in der ein Filterhilfsmittel mit einer durchschnittlichen Faserlänge der Viskosefasern von weniger als 100 $\mu$m verwendet wird, und eine auf die erste Filtrationsphase folgende zweite Filtrationsphase, in der ein Filterhilfsmittel mit einer durchschnittlichen Faserlänge der Viskosefasern von mehr als 200 $\mu$m verwendet wird. Beispielsweise kann die zweite Filtrationsphase in Reaktion darauf ausgeführt werden, dass im Zuge der ersten Filtrationsphase der Filterkuchen eine Verblockung erleidet, d.h., wenn eine Druckdifferenz von innerhalb zu außerhalb des Anschwemmfilters einen gewissen Wert übersteigt beziehungsweise eine Durchflussgeschwindigkeit durch den Anschwemmfilter einen bestimmten Wert unterschreitet. Die Zudosage längerer Viskosefasern führt zu einer Auflockerung des Filterkuchens in der zweiten Filtrationsphase.

Die oben beschriebenen Filterhilfsmittel, Verfahren und Filter können allgemein zur Filtration von Fluiden, wie flüssigen Lebens- und Genussmitteln, insbesondere von Bier, sowie deren Rohstoffen und Zwischenprodukten, Verwendung finden. Unter flüssigen Lebens- und Genussmittel sind alle zum Verzehr geeigneten Fluide zu verstehen, wie z.B. Bier, Wein, Milch, Limonaden, Säfte (z. B. Apfelsaft), Tee, Spirituosen, Ketchup, Speiseöle usw. Unter Rohstoffen und Zwischenprodukten kann z.B. Wasser oder Zuckersirup zu verstehen sein.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

Figur 1 zeigt eine schematische Darstellung eines Anschwemmfiltersystems gemäß der vorliegenden Erfindung.

Figur 2 zeigt einen schematischen Längsschnitt durch einen Anschwemmfilter mit Filterkerzen.

Filter 3 zeigt einen schematischen Längsschnitt durch eine herkömmliche Filterkerze.

Figur 3a zeigt einen Schnitt entlang der Linie A-A der Figur 3.

Figur 4 zeigt einen Längsschnitt einer beispielhaften Ausführung einer Filterkerze mit Öffnungen im Mantel eines hohlen Innenkörpers gemäß der vorliegenden Erfindung.

Figur 5 zeigt Testergebnisse einer Filtration mit kompressiblen Filterhilfsmitteln gemäß der vorliegenden Erfindung.

Figur 6 zeigt einen Anschwemmkerzenfilter, in dem das erfindungsgemäße Filterhilfsmittel Verwendung finden werden kann.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

## Filterverfahren und Filter

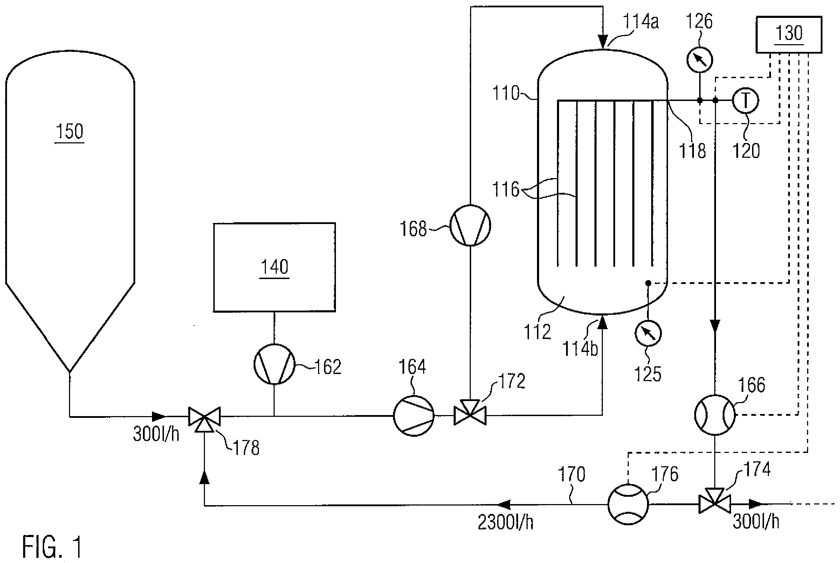

Figur 1 zeigt eine schematische Darstellung eines Anschwemmfiltersystems gemäß der vorliegenden Erfindung. Das Anschwemmfiltersystem umfasst einen Filterkessel 110 mit einem Zulauf 114a von oben und einem Zulauf 114b von unten. In dem von dem Filterkessel umschlossenen Unfiltratraum 112 sind eine Vielzahl von Filterelementen 116 exemplarisch in Form einer Matrix an einem Registerablauf 118 für das Filtrat angeordnet. Es versteht sich jedoch, dass auch andere Anordnungen und Ausbildungen der Filterelemente 116 sowie der Zuläufe 114a und 114b und des Ablaufs 118 von der vorliegenden Erfindung umfasst sind. Das Anschwemmfiltersystem umfasst weiterhin einen im Unfiltratraum 112 angeordneten Drucksensor 125, einen am Filtratablauf angeordneten Drucksensor 126 und einen ebenfalls am Filtratablauf angeordneten Trübungssensor 120. Dabei misst der Drucksensor 125 den im Unfiltratraum 112 vorherrschenden Druck und leitet den Messwert an eine Steuereinheit 130 weiter (durch gestrichelte Linien angedeutet). Entsprechend misst der Drucksensor 126 den Druck im Filtrat und übermittelt den Messwert an die Steuereinheit 130. Alternativ kann auch ein Differenzdrucksensor vorgesehen sein, der die Druckdifferenz über die Filterschicht des Anschwemmfilters direkt misst. In Abhängigkeit von der gemessenen Trübung im Filtrat regelt die Steuereinheit 130 wie im Folgenden beschrieben die Druckdifferenz über Anpassung des Volumenstroms an Unfiltrat. Ein Durchflussmesser 166 misst zudem den Filtratstrom, welcher aus dem Filterkessel 110 abgeführt wird. Ein weiterer Durchflussmesser 176 misst den Filtratstrom, welcher dem Unfiltratstrom über das Ventil 178 wieder beigeführt wird.

Im Grundbetrieb wird zu filtrierendes Fluid, beispielsweise Bier, mit einem bestimmten Volumenstrom, z. B. 300l/h, wie exemplarisch in der Figur 1 angegeben, aus einem Lagertank 150 über eine Pumpe 164, welche vorzugsweise regelbar ist, zum unteren Zulauf 114b des Filterkessels 110 geliefert. Dabei wird das zu filtrierende Fluid kontinuierlich mit Filterhilfsmittel aus einem Vorratsbehälter 140 für Filterhilfsmittel versetzt, wobei eine Pumpe 162 oder ein regelbares Ventil (nicht dargestellt) die Dosierung an Filterhilfsmittel regelt. Das mit Filterhilfsmittel versetzte Fluid tritt durch den unteren Zulauf 114b und/oder den oberen Zulauf 114a in den Filterkessel 110 ein. Beim Durchtritt durch die Filterelemente 116 lagert sich das Filterhilfsmittel zusammen mit den Trubstoffen auf der Oberfläche der Filterelemente 116 ab und bildet so die Filterschicht auf einer vorher aufgetragenen Anschwemmschicht ohne Trubstoffe bzw. den Filterkuchen. Das von Trubstoffen im Wesentlichen befreite Filtrat tritt anschließend über den Registerablauf 118 in die Ablaufleitung, von wo es an eine Abfüllstation (nicht dargestellt) für Flaschen und Fässer oder einen Sammeltank (nicht dargestellt) weitergeleitet werden kann. Dabei wird im Grundbetrieb dieselbe Menge an Filtrat (z.B. 300l/h) aus dem System abgezogen, die an Unfiltrat zugeführt wird.

Gemäß der vorliegenden Erfindung wird eine Porosität der auf den Filterelementen 116 angeschwemmten Filterschicht mittels der Steuereinheit 130 über eine Regelung der Druckdifferenz zwischen Unfiltratseite und Filtratseite des Anschwemmfilters durch Anpassung des dem Filterkessel 110 zugeführten Volumenstroms an Unfiltrat geregelt. Dabei bezeichnet der Volumenstrom an Unfiltrat die Menge an Unfiltrat pro Zeiteinheit, die von der regelbaren Pumpe 164 gefördert wird. Das Unfiltrat kann dabei wie oben ausführlich beschrieben zu filtrierendes Fluid, Filterhilfsmittel und/oder rückgeführtes Filtrat umfassen. Um den Volumenstrom an Unfiltrat regeln zu können, ist die regelbare Pumpe 164 mit der Steuereinheit 130 verbunden, welche wie oben beschrieben in Abhängigkeit von dem gemessenen Trübungswert den Volumenstrom erhöht oder senkt und damit die Druckdifferenz an der Anschwemmschicht steuert. Wie oben beschrieben kann die Steuereinheit derart ausgebildet sein, dass sie den Volumenstrom nur erhöht, wenn die aus den Werten der Drucksensoren 125 und 126 berechnete Druckdifferenz über die Filterschicht unter einem maximalen Druckwert liegt. Um den Volumenstrom an Unfiltrat anpassen zu können, können alternativ zu einer regelbaren Pumpe auch andere geeignete Einrichtungen wie z.B. Regelklappen/Regelventile verwendet werden. Dies gilt selbstverständlich für alle hier erwähnten Pumpen.

Der von der Pumpe 164 geförderte Volumenstrom an Unfiltrat kann entweder ausschließlich über den unteren Zulauf 114b, ausschließlich über den oberen Zulauf 114a oder gleichzeitig über beide Zuläufe in den Filterkessel 110 eintreten. Dazu kann ein regelbares Drei-Wege-Ventil 172 an einer Verzweigungsstelle der Zuführleitung vorgesehen sein, dessen Einstellung von der Steuereinheit 130 gesteuert wird. Eine zumindest zeitweise Zufuhr von Unfiltrat sowohl über den unteren Zulauf 114b als auch über den oberen Zulauf 114a kann zu einer gleichmäßigeren Anschwemmung des Filterhilfsmittels an den Filterelementen 116 führen. Dabei kann die Steuereinheit 130 das Verhältnis der Volumenströme über den oberen bzw. den unteren Zulauf über das Drei-Wege-Ventil 172 steuern. Die exemplarische Weiterbildung der Figur 1 zeigt weiterhin eine regelbare Pumpe 168, welche im Zweig zum oberen Zulauf 114a angeordnet ist und bei Betrieb einen Kreislauf von Unfiltrat über den unteren Zulauf 114b, den Filterkessel 110, den oberen Zulauf 114a und das Ventil 172 erzeugt. In diesem Fall kann der oberen Zulauf 114a als Ablauf für Unfiltrat betrieben werden. Als Ergebnis liegt im Unfiltratraum 112 wie weiter unten beschrieben eine nach oben gerichtete Unfiltratströmung vor, welche zu einer gleichmäßigeren Anschwemmung von Filterhilfsmittel führt. Aufgrund der Anordnung der regelbaren Pumpe 164 vor dem Ventil 172 kann diese Unfiltratströmung mit der beschriebenen Regelung des Volumenstroms an Unfiltrat kombiniert werden. Dafür kann ein weiteres Durchflussmessgerät in der Leitung von dem in diesem Fall als Ablauf verwendeten oberen Zulauf 114a vorgesehen werden, welches hier nicht dargestellt ist.

Gemäß einer ersten Weiterbildung wird die Druckdifferenz wie oben beschrieben ausschließlich über Anpassung des Volumenstroms von zu filtrierendem Fluid, das dem Lagertank 150 entnommen wird, geregelt. In diesem Fall schwankt auch der Volumenstrom an abgeführtem Filtrat entsprechend.

Alternativ oder zusätzlich kann das Anschwemmfiltersystem wie in Figur 1 gezeigt jedoch eine Rückführleitung 170 für Filtrat aufweisen, die von einem regelbaren Drei-Wege-Ventil 174 in der Ablaufleitung abzweigt und zur Zulaufleitung vor der Pumpe 164 führt. Dabei kann die Einspeisung des rückgeführten Filtrats in die Zulaufleitung über ein Drei-Wege-Ventil 178 stromaufwärts von der Zudosierung erfolgen.

Das Drei-Wege-Ventile 178 wird von der Steuereinheit 130 in Abhängigkeit von der gewünschten Zuführung von Unfiltrat aus dem Lagertank 150 gesteuert. Dabei kann die weitere Zufuhr von zu filtrierendem und/oder zu stabilisierendem Fluid aus dem Lagertank 150 durch das Ventil 178 vollständig blockiert werden, z.B. bei starker Überschreitung eines maximalen Trübungswertes, sodass der Anschwemmfilter im Kreislauf betrieben wird. Im Normalbetrieb wird das rückgeführte Filtrat jedoch lediglich dem zu filtrierenden Fluid beigemischt, wobei über eine Ansteuerung des regelbaren Ventils 174 die Menge an pro Zeiteinheit zurückgeführtem Filtrat geregelt wird. Beispielsweise können wie in der Figur 1 angedeutet 2300l/h an Filtrat rückgeführt werden, sodass der Volumenstrom an zu filtrierendem Fluid nur einen kleinen Teil des Gesamtvolumenstroms an Unfiltrat ausmacht. Dabei bestimmt die Steuereinheit 130 den Anteil an Filtrat, der über die Rückführleitung 170 rückgeführt wird. Das nicht rückgeführte Filtrat wird über die Ablaufleitung weiter z.B. an den Sammeltank geleitet. Im Normalbetrieb entspricht dieser Anteil erneut dem Anteil an zugeführtem zu filtrierendem Fluid.

Zur Erhöhung des Volumenstroms an Unfiltrat erhöht die Steuereinheit 130 die Leistung der Pumpe 164. Der Volumenstrom kann durch Erhöhung des Zuflusses an zu filtrierendem Fluid aus dem Lagertank 150 mittels Ventil 178 ausgeglichen werden. Alternativ oder zusätzlich kann die Steuereinheit 130 mindestens einen Teil des Filtrats über die Rückführleitung 170 in den Zulauf zum Filterkessel 110 zurückführen bzw. den Volumenstrom an rückgeführtem Filtrat über Ansteuerung des Ventils 174 erhöhen. In beiden Fällen steigt der von dem Drucksensor 125 gemessene Druck im Unfiltratraum 112, wodurch die Druckdifferenz über den Filterkuchen ansteigt. Dies führt wiederum zu einer erhöhten Kompression des Filterkuchens und einer entsprechenden Reduzierung der Porosität des Filterkuchens. Als Ergebnis sinkt die von dem Trübungssensor 120 gemessene Resttrübung im Filtrat. Sollte die Trübung unter den Grenzwert für die Trübung sinken, kann die Steuereinheit entsprechend den Zufluss an zu filtrierendem Fluid und/oder den Volumenstrom an rückgeführtem Filtrat senken, um den Volumenstrom an Unfiltrat zu reduzieren. Als Ergebnis entspannt sich der Filterkuchen, was zu einer größeren Porosität und einer Zunahme der Trübung führt. Auf diese Weise kann die Steuereinheit 130 gezielt die Porosität des Filterkuchens in Abhängigkeit von einer gemessenen Trübung im Filtrat einstellen.

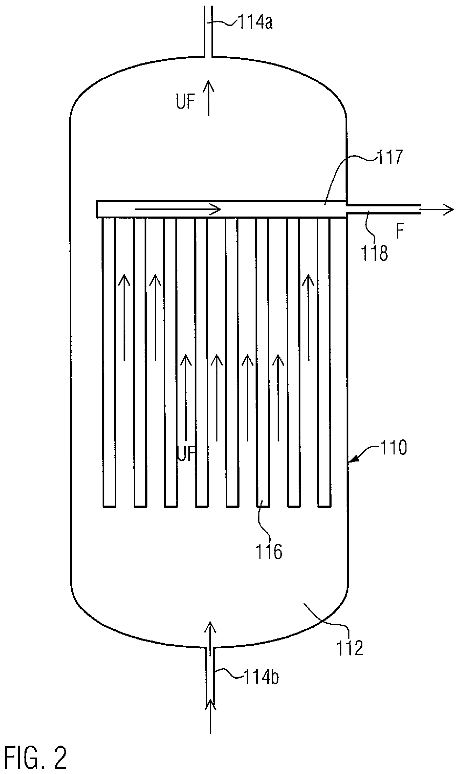

Figur 2 zeigt einen schematischen Längsschnitt durch einen Anschwemmfilter mit Filterkerzen, der mit dem oben beschriebenen Verfahren zur Regelung des Volumenstroms an Unfiltrat betrieben werden kann. Der Anschwemmfilter umfasst einen Filterkessel 110 mit einem durchgehenden Unfiltratraum 112, einem unteren Zulauf 114b für Unfiltrat und einem oberen Zulauf bzw. Ablauf 114a für Unfiltrat. Eine Vielzahl von Filterkerzen 116 ist in der dargestellten Ausführung des Anschwemmfilters in Form einer Matrix hängend an einem Registerablauf 117 für das Filtrat befestigt. Dabei werden die Filterkerzenabläufe über Rohrsysteme zusammengefasst und können separat abgeführt werden. Der Registerablauf 117 stellt somit einen Ablauf 118 für das Filtrat F dar, wobei die Ablaufmenge über eine Regeleinrichtung eingestellt werden kann.

Die Zufuhr von Unfiltrat über den unteren Zulauf 114b kann mittels eines Regelventils eingestellt werden. Alternativ kann es sich bei dem Ventil lediglich um ein Absperrventil handeln. Im Allgemeinen tritt das Unfiltrat von unten über den Zulauf 114b in den Filterkessel 110 ein, wobei es das zudosierte Filterhilfsmittel und/oder Stabilisierungsmittel mit sich führt. Wie durch die Pfeile in der Figur 2 angedeutet, steigt das Unfiltrat UF vom unteren Zulauf 114b her im Filterkessel 110 auf, wobei es eine Außenfläche der Filterkerzen 116 überströmt. In der hier dargestellten Weiterbildung mit einem Registerablauf 117 kann das nicht in die Filterkerzen eintretende Unfiltrat durch Öffnungen zwischen den Rohrleitungen des Registerablaufs und/oder seitlich am Registerablauf vorbei strömen, wodurch eine nach oben gerichtete Grundströmung entlang der gesamten Länge der Filterkerzen 116 erzeugt wird. Um ein Aufstauen des überschüssigen Unfiltrats im oberen Bereich des Filterkessels 110 zu vermeiden, kann über den oberen Zulauf/Ablauf 114a und eine damit verbundene Bypassleitung (nicht gezeigt) Unfiltrat aus dem oberen Bereich des Filterkessels abgezogen werden. Bevorzugt ist dabei die Zufuhr 114b für Unfiltrat unterhalb des unteren Endes der Filterkerzen angeordnet, während der Ablauf 114a für Unfiltrat zur Bypassleitung hin oberhalb des oberen Endes der Filterkerzen am Filterkessel 110 angeordnet ist. Das Abziehen von Unfiltrat über die Ablaufleitung 114a kann mittels eines Stellventils oder der in Figur 1 gezeigten regelbaren Pumpe 168 geregelt werden, sodass sich eine wohl definierte, aufwärts gerichtete Grundströmung an Unfiltrat im Inneren des Unfiltratraums einstellt. Auf diese Weise wird die für eine als Trennebene dienende Kopfplatte übliche Stagnation des aufwärts gerichteten Unfiltratstroms vermieden. Das über den Ablauf 114a und die damit verbundene Bypassleitung abgezogene Unfiltrat kann dem Filterkessel 110 über den unteren Zulauf 114b erneut zugeführt werden. Die hier schematisch dargestellten herkömmlichen Filterkerzen 116 können insbesondere ohne größeren technischen Aufwand durch die weiter unten beschriebenen Filterkerzen gemäß der vorliegenden Erfindung ersetzt werden. Der obere Zulauf/Ablauf 114a wird in der Figur 2 als kombinierte Einrichtung beschrieben, selbstverständlich wäre auch ein separater Zu- und Ablauf denkbar.

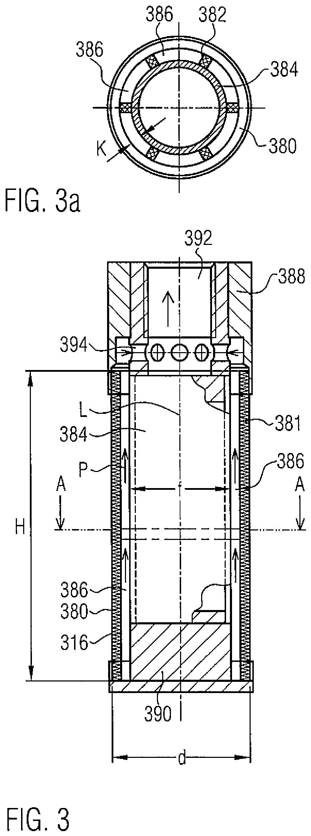

Figur 3 zeigt einen schematischen Längsschnitt durch eine herkömmliche Filterkerze. Figur 3a zeigt einen Schnitt entlang der Linie A-A der Figur 3. Bei der hier dargestellten herkömmlichen Filterkerze mit Durchmesser d dient exemplarisch ein spiralförmig gewundener Draht 381 als Filterkörper 380. Der Draht 381 kann z. B. im Querschnitt im Wesentlichen dreieckförmig ausgebildet sein, wobei die Grundlinie des Dreiecks auf der Außenseite der Kerzenfilterwand liegt und in Längsrichtung der Kerze verläuft, und sich zwischen jeweils zwei benachbarten Windungen des Drahtes in an sich bekannter Weise und daher nicht dargestellt ein sich zu dem Kerzeninneren hin erweiternder Spalt mit einer Spaltbreite von 30 bis 100 μm an der Außenseite der Kerzenfilterwand bildet. Der Spalt zwischen den Drahtwindungen dient dabei als Fluiddurchlass.

In dem hier dargestellten Beispiel ist der Draht 381, wie aus den Figuren 3 und 3a hervorgeht, über Abstandshalter 382 um einen hohlzylindrischen Innenkörper 384 gewunden, wobei der Innenkörper 384 und der Draht 381 über die Abstandshalter 382 miteinander verbunden, z. B. an mehreren Stellen miteinander verschweißt, sind. Somit dient der Innenkörper 384 gleichzeitig als Träger für den den gewundenen Draht 381 umfassenden Filterkörper 380 und verleiht diesem somit eine hohe Stabilität.

Die Abstandshalter 382 sind in diesem Beispiel als Stäbe ausgebildet, die sich entlang der Längsachse L der Filterkerze 316 erstrecken. Sowohl die Abstandshalter 382 als auch der Innenkörper 384 erstrecken sich entlang der Längsachse L über die gesamte Länge des Filterkörpers 380, hier des gewundenen Drahtes 381. Durch den Innenkörper 384 und die Abstandshalter 382 ergeben sich zwischen dem Filterkörper 380 und dem Innenkörper 384 mehrere Filtratkanäle 386. Bei diesem Beispiel wurden sechs Abstandshalter 382 verwendet, sodass sich insgesamt sechs Filtratkanäle 386 ergeben, welche eine Kanalbreite K aufweisen. Eine beliebige andere Anzahl von Abstandshaltern sowie alternative Ausbildungen zum Verbinden des Filterkörpers 380 mit dem Innenkörper 384, beispielsweise durch sternförmiges Ausbilden des Innenkörpers, sind im Stand der Technik bekannt. In allen Fällen bilden sich zwischen dem Filterkörper 380 und dem Innenkörper 384 ein oder mehrere Filtratkanäle 386 aus, wobei die Form dieser Filtratkanäle, insbesondere deren Querschnitt, durch die Form des Filterkörpers 380 und/oder des Innenkörpers 384 bestimmt wird.

In einer herkömmlichen Filterkerze wird durch den Innenkörper 384 das Innenvolumen innerhalb des Filterkörpers 380 erheblich reduziert. Der Innenkörper einer herkömmlichen Filterkerze weist dabei einen vollständig geschlossenen Außenmantel auf, d. h., dass kein Filtrat ins Innere des Innenkörpers eindringen kann. Dabei kann der Innenkörper 384 aus Gewichtsgründen innen hohl, d. h. rohrförmig, ausgebildet sein oder aber massiv ausgebildet sein. Bei einer herkömmlichen Filterkerze mit einem einzigen Filtratablauf 392 ist der Innenkörper 384 auf der dem Filtratablauf gegenüberliegenden Seite der Filterkerze mit einem Endstück 390 verschlossen, welches zudem die Filtratkanäle 386 am unteren Ende der Filterkerze verschließt. Somit bleibt dem durch den Filterkuchen und den Filterkörper 380 hindurchtretenden Filtrat lediglich die Möglichkeit, entlang der dargestellten Pfeile P in den Filtratkanälen 386 zum oberen Ende der Filterkerze hin abzuströmen.

In der hier dargestellten Weiterbildung der Filterkerzen mündet das obere Ende der Filterkerze in einem Kopfstück 388, welches über einen Ablauf 392 für das Filtrat verfügt. Aus den Filtratkanälen 386 tritt das Filtrat durch Aussparungen 394, die im Kopfstück 388 für jeden Filtratkanal 386 ausgebildet sind, in den Filtratablauf 392 des Kopfstücks ein, von wo es beispielsweise in eine Rohrleitung eines Registerablaufs eintreten kann. Eine Vielzahl der hier dargestellten Filterkerzen kann mit ihrem jeweiligen Kopfstück 388 mit der entsprechenden Rohrleitung eines Registerablaufs 117 der Figur 2 verbunden werden.

Die hier dargestellte herkömmliche Filterkerze hat den Nachteil, dass der Querschnitt des oder der Filtratkanäle 386 entlang der Längsachse L der Filterkerze über die gesamte Höhe H der aktiven Filterfläche des Filterkörpers 380 konstant bleibt. Da aber über die gesamten Höhe H der aktiven Fläche des Filterkörpers 380 kontinuierlich Filtrat in die Filtratkanäle 386 übertritt, muss auf dem Weg zum Filtratablauf 392 eine ständig zunehmende Menge an Filtrat durch einen gleichbleibenden Querschnitt der Filtratkanäle gefördert werden. Dies ist jedoch nur mit zunehmender Strömungsgeschwindigkeit des Filtrats zum Filtratablauf 392 hin möglich, sodass sich entlang der Längsrichtung L der Filterkerze ein Strömungsprofil des Filtrats ergibt, welches am unteren Ende der Filterkerze einen Stagnationspunkt aufweist und am oberen Ende der Filtratkanäle 386 maximal ist. Ein solches Strömungsprofil verhält sich jedoch anders als das Strömungsprofil des die Außenfläche des Filterkörpers 380 überströmenden Unfiltrats, welches im Allgemeinen mit zunehmender Höhe über dem Boden des Filterkessels 110 abnimmt. Diesem Effekt kann mit dem in Figur 2 gezeigtem Anschwemmfilter entgegen gewirkt werden, da der Unfiltratstrom über Ablauf bzw. Zulauf 114a beeinflusst werden kann. Bei Anschwemmkerzenfilter klassischer Bauart mit Kopfplatte statt Register nimmt mit zunehmender Höhe über dem Boden des Filterkessels der Unfiltratstrom ab und kommt an der Kopfplatte zur Stagnation. Die unterschiedliche Entwicklung der Strömungsprofile des Filtrats zwischen Filterkörper 380 und Innenkörper 384 und Unfiltrat an der Außenfläche des Filterkörpers 380 führt zu einer Variation der Druckdifferenz über den Filterkörper entlang der Längsachse der Filterkerze, welche zu einer ungleichmäßigen Anschwemmung des Filterhilfsmittels führt. Dabei ist die Anschwemmung bei Verwendung von kompressiblen Filterhilfsmitteln mit großen Partikeln besonders ungleichmäßig, da diese einen deutlich geringeren Widerstand als die herkömmliche Kieselgur in der Anschwemmschicht erzeugen. Herkömmliche Filterkerzen lassen sich bei Verwendung von kompressiblen Filterhilfsmitteln daher nur bedingt mit dem oben beschriebenen Verfahren zur Regelung der Porosität einsetzen.

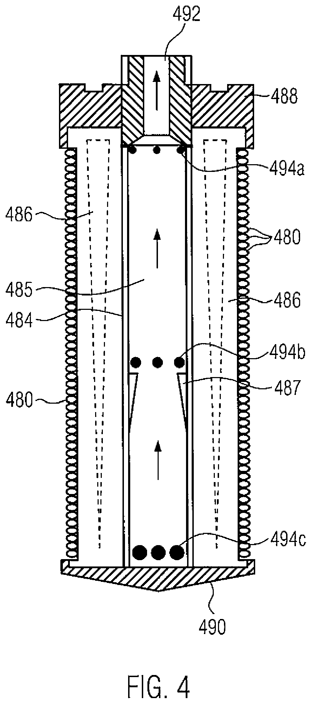

Die vorliegende Erfindung löst dieses Problem durch gezieltes Einwirken auf das Strömungsprofil des Filtrats in dem oder den Filtratkanälen, wobei bevorzugt eine konstante Strömungsgeschwindigkeit oder eine Anpassung der Strömungsgeschwindigkeit des Filtrats an die Strömungsgeschwindigkeit des Unfiltrats an der Außenfläche des Filterkörpers erreicht werden soll. Hierzu kann einerseits der Querschnitt der Filtratkanäle 386 durch Variation des Querschnitts des Innenkörpers 384 und/oder des Filterkörpers 380 derart angepasst werden, dass der Querschnitt sich zum Filtratablauf 392 hin kontinuierlich erweitert. Alternativ oder zusätzlich kann der Innenkörper 484 der Filterkerze wie in Figur 4 gezeigt mit Öffnungen zum Einlassen von Filtrat in das Innere des Innenkörpers versehen sein.

Figur 4 zeigt eine beispielhafte Ausführung einer Filterkerze mit Öffnungen im Mantel eines hohlen Innenkörpers gemäß der vorliegenden Erfindung. Bei der in Figur 3 gezeigten herkömmlichen Filterkerze ergibt sich wie bereits beschrieben ein Strömungsprofil im Filtratkanal 386, welches an dem dem Filtratablauf 392 gegenüberliegenden Ende der Filterkerze einen Stagnationspunkt aufweist und auf der Seite des Filtratablaufs ein Maximum besitzt. In der Figur 4 ist dieses Strömungsprofil von Filtrat im Filtratkanal einer herkömmlichen Filterkerze in Form eines gestrichelten Keils angedeutet.

Gemäß der Bernoullischen Gleichung führt eine Zunahme der Filtratströmungsgeschwindigkeit jedoch zu einer Zunahme der Druckdifferenz über den Filterkörper 480, wodurch sich insbesondere die relativ leichten kompressiblen Filterhilfsmittel, wie beispielsweise Viskose, im Wesentlichen auf der Seite des Filtratablaufs 492 anlagern. Um die dadurch entstehende ungleichmäßige Ausbildung der Anschwemmschicht zu vermeiden, wird bei der in Figur 4 dargestellten exemplarischen Filterkerze gemäß der vorliegenden Erfindung Filtrat nicht unmittelbar aus dem Filtratkanal 486 abgezogen, sondern indirekt über einen Filtratablauf 492, der mit dem hohlen Innenraum 485 des Innenkörpers 484 verbunden ist. Damit Filtrat aus dem Filtratkanal 486 in diesen Hohlraum 485 übertreten kann, sind entlang der Längsachse der Filterkerze an zwei oder mehr Stellen der Mantelfläche des Innenkörpers 484 entlang des Umfangs des im Allgemeinen rotationssymmetrischen Innenkörpers 484 Öffnungen 494a-c vorgesehen. Es versteht sich, dass die in der Figur gezeigte Weiterbildung mit Öffnungen an drei Stellen 494a-c lediglich eine exemplarische Weiterbildung darstellt und dass insbesondere auch an nur zwei Stellen oder auch mehr als drei Stellen Öffnungen vorgesehen werden können, um ein gewünschtes Strömungsprofil der Filtratströmung im Filtratkanal 486 zu erzeugen.

Da der Filtratkanal 486 in dieser Weiterbildung oben und unten durch das Kopfstück 488 bzw. das Endstück 490 der Filterkerze verschlossen ist, kann Filtrat somit lediglich durch diese Öffnungen 494a-c zum Filtratablauf 492 hin strömen, welcher exemplarisch und nicht limitierend am oberen Ende der Filterkerze angeordnet ist. Dabei bestimmt die Gesamtfläche der jeweiligen Öffnungen zusammen mit den hydrodynamischen Verhältnissen im Filtratkanal, d. h. insbesondere dem Druck des Filtrats, wieviel Filtrat an der jeweiligen Stelle durch die Öffnungen in den Hohlraum 485 eintritt. Innerhalb dieses Hohlraums 485 entsteht dann erneut eine Filtratströmung, die zum Filtratablauf 492 hin gerichtet ist, was in der Figur durch Pfeile angedeutet ist. In Kombination mit dieser Filtratströmung kann durch die Größe und/oder Anzahl der Öffnungen 494a-c, sowie deren Lage entlang der Längsachse der Filterkerze das Strömungsprofil der Filtratströmung im Filtratkanal 486 beeinflusst werden.

Erfindungsgemäß werden umfänglich angeordnete Öffnungen an mindestens zwei Stellen entlang der Längsachse des Innenkörpers 484 vorgesehen, dessen Mantel jedoch ansonsten geschlossen ist. Somit kann Filtrat nur an wohl definierte Stellen 494a-c aus dem Filtratkanal 486 in den Innenkörper 484 eintreten. Durch Vorsehen von Öffnungen an dem im Filtratablauf 492 gegenüberliegenden Ende der Filterkerze kann insbesondere der Stagnationspunkt herkömmlicher Filterkerzen im Filtratkanal 486 vermieden werden.

Gemäß einer speziellen Weiterbildung kann die Gesamtfläche der Öffnungen derart variiert werden, dass sie mit zunehmender Entfernung vom Filtratablauf 492 zunimmt, so wie es durch die relative Größe der Öffnung 494a-c in der Figur angedeutet ist. Dadurch kann der Tendenz einer Zunahme der Strömungsgeschwindigkeit des Filtrats im Inneren 485 des Innenkörpers 484 zum Filtratablauf 492 hin entgegengewirkt werden, da bereits eine größere Menge von Filtrat am unteren Ende der Filterkerze durch die Öffnungen 494c in den Innenraum eintritt. Die Zunahme der Strömungsgeschwindigkeit des Filtrats im Innenraum 485 wird somit reduziert, wodurch unerwünschte Effekte aufgrund des hydrodynamischen Drucks vermieden werden können.

In der hier dargestellten speziellen Weiterbildung weist der Innenkörper 484 an drei Stellen 494a-c umfänglich angeordneten Öffnungen auf, wobei sich die mittleren Öffnungen 494b im Bereich der mittleren 20 %, bevorzugt 10 %, der Länge des Innenkörpers 484 befinden können. Auf diese Weise kann das Strömungsprofil der Filtratströmung im Filtratkanal 486 auch für lange Filterkerzen, beispielsweise mit einer Länge größer als 2 m, gezielt beeinflusst werden. Wie bereits erwähnt können jedoch an weiteren Stellen zusätzliche Öffnungen vorgesehen werden, beispielsweise in einem regelmäßigen Abstand von etwa 20cm entlang des Innenkörpers.

Die hier dargestellte Weiterbildung weist zudem Reduzierungselemente 487 im Innenraum 485 des Innenkörpers 484 auf, durch die der Querschnitt des hohlen Innenraums 485 unmittelbar stromaufwärts von den Öffnungen 494b an einer oder mehreren Stellen reduziert werden kann. Es versteht sich, dass solche Verjüngungen an mehr als der einen gezeigten Stelle, insbesondere für alle Öffnungen, vorgesehen sein können. Alternativ kann der Querschnitt des Innenrohrs, beispielsweise durch Verdickung der Innenrohrwand, unmittelbar stromaufwärts von den Öffnungen reduziert werden. Die Reduzierungselemente 487 bzw. Wandverdickungen können auch unmittelbar im Bereich der Öffnungen vorgesehen sein, wobei die Öffnungen neben segmentartigen Reduzierungselementen angeordnet oder durch die Reduzierungselemente bzw. Wandverdickungen hindurch vorgesehen sein können. Durch Reduzierung des Querschnittes ergibt sich gemäß dem Venturi-Effekt eine Erhöhung der lokalen Strömungsgeschwindigkeit, wodurch eine Druckdifferenz zwischen dem Filtratkanal 486 und dem Innenraum 485 erhöht werden kann, sodass vermehrt Filtrat aus dem Filtratkanal 486 durch die Öffnungen 494b in den Innenkörper 484 gesaugt werden kann. Das verjüngende Element 487 ist dabei stromaufwärts von den Öffnungen 494b bezüglich der Strömungsrichtung des Filtrats im Innenraum 485 angeordnet, um den Venturi-Effekt im Nachlauf im Bereich der Öffnung 494b zu erzeugen.

Die Lage, Größe und Anzahl der Öffnungen kann hydrodynamisch in Abhängigkeit von einem vorgegebenen Überströmungsprofil durch das Unfiltrat an der Außenfläche des Filterkörpers 480 und den gewünschten Filtratströmungsprofilen im Filtratkanal 486 bzw. Innenraum 485 des Innenkörpers 484 berechnet werden. Es versteht sich, dass die spezielle Weiterbildung des Innenkörpers mit lokal vorgesehenen Öffnungen gemäß der obigen Beschreibung auch mit Filtratkanälen 486 mit variablem Querschnitt kombiniert werden kann. Entsprechend der Variation des Querschnitts des Filtratkanals ergibt sich eine Modifikation der Anordnung und/oder der Gesamtfläche der Öffnungen der Figur 4.

Die im Vorhergehenden beschriebenen Filterkerzen gemäß der vorliegenden Erfindung wurden entwickelt, um durch Beeinflussung der Filtratströmung innerhalb der Filterkerze eine Vergleichmäßigung der Anschwemmschicht auf der Außenfläche des Filterkörpers entlang der gesamten Länge der Filterkerze zu erreichen. Um eine solche Vergleichmäßigung zu erzielen, werden Formen von Filterkörper und/oder Innenkörper sowie Anordnungen der Filtratabläufe derart vorgesehen, dass sich ein möglichst gleichmäßiges Strömungsprofil der Filtratströmung im Filtratkanal ergibt oder dass dieses Strömungsprofil an ein Überströmungsprofil des Unfiltrats an der Außenfläche des Filterkörpers angepasst wird. Auf diese Weise können Variationen der Druckdifferenzen über die Filterschicht aufgrund von entlang der Längsachse der Filterkerze variierenden Unterschieden zwischen den Strömungsgeschwindigkeiten von Filtrat und Unfiltrat reduziert werden, sodass sich eine gleichmäßigere Filterschicht, sowohl in Hinblick auf deren Dicke als auch deren Homogenität in Bezug auf die Partikelverteilung, ergibt. Die beschriebenen Filterkerzen sind dabei besonders für den Einsatz in Kombination mit kompressiblen Filterhilfsmitteln, wie beispielsweise Viskose, geeignet. Aufgrund der Vergleichmäßigung der Anschwemmschicht durch Verwendung der beschriebenen Filterkerzen lässt sich ein solcher Anschwemmkerzenfilter besonders effektiv mit den oben beschriebenen Verfahren zur Regelung der Porosität der Anschwemmschicht betreiben. Die bisher verwendete Kieselgur lässt sich daher durch die neueren kompressiblen Filterhilfsmittel ersetzen.

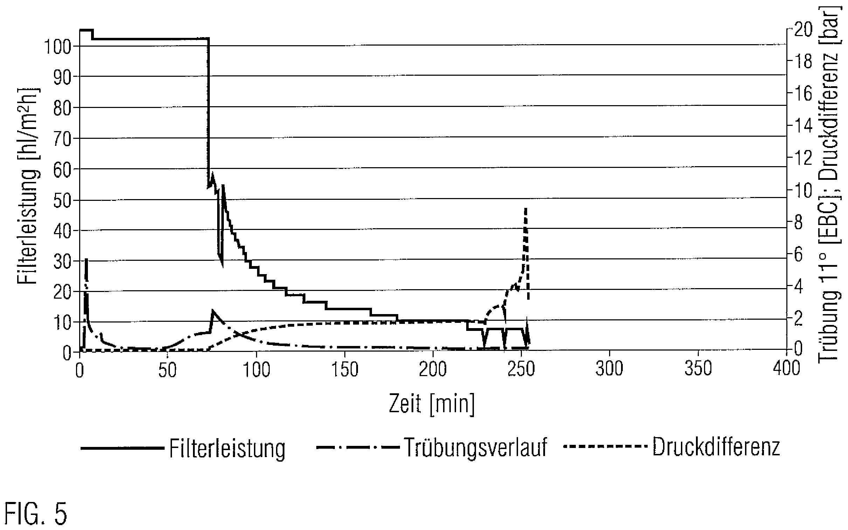

Figur 5 zeigt Testergebnisse einer Filtration mit kompressiblen Filterhilfsmitteln gemäß der vorliegenden Erfindung. Für den Test wurde ein Testfilterelement mit einer horizontalen Fritte verwendet, wobei die Regelung des Volumenstroms an Unfiltrat rein über die Regelung des Volumenstroms an zu filtrierendem Bier, d.h. ohne Rückführung von Filtrat, erfolgte. Die Figur zeigt die Messwerte für die Filterleistung in hl/m$^2$h, d.h. den Volumenstrom von Unfiltrat pro Quadratmeter Filterfläche, als durchgezogene Linie, den Verlauf der Trübungswerte bei 11° Durchlichtmessung als Strichpunktlinie, sowie den Verlauf der Druckdifferenz über die Filterschicht als gestrichelte Linie.

Nach einer etwa 75-minütigen Grundanschwemmphase wurde der Volumenstrom an Unfiltrat, und damit die Filterleistung, zunächst drastisch heruntergeregelt. Die Resttrübung erfährt hierdurch einen starken Anstieg, da sich der Filterkuchen zunächst entspannt. Ein weiterer Abfall der Filterleistung wird daher von der Regelung verhindert, bis sich eine Druckdifferenz aufbaut und danach die Trübung zu sinken beginnt. Hierbei ist anzumerken, dass die gezeigten Trübungswerte nicht repräsentativ sind, sondern lediglich der Illustration dienen. Mit zunehmender Anschwemmung von Filterhilfsmittel sowie Abscheidung von Trubstoffen wächst die Druckdifferenz über den Filterkuchen bei gleichzeitiger Abnahme der Resttrübung, bis ein Plateauwert bei ca. 2 bar erreicht ist. Ein weiterer Anstieg der Druckdifferenz, welcher zum Durchbruch der Filterschicht führen könnte, wird dabei von der erfindungsmäßigen Regelung durch Reduzierung des Volumenstroms vermieden. Die Trübungswerte bewegen sich dabei über die gesamte Plateauphase in einem sehr niedrigen Bereich. Die Reduzierung des Volumenstroms verhindert eine vorzeitige Verblockung des Filterkuchens durch die abgefilterten Trübungspartikel und verlängert dadurch die Standzeit des Filters. Letztlich lässt sich die Verblockung jedoch nicht vollständig vermeiden, sodass es nach ca. 225 Minuten zu einem sprunghaften Anstieg der Druckdifferenz kommt, welche das Ende der Filtration einläutet.

Eine weitere Verbesserung der Filterleistung ließe sich dadurch erzielen, dass mit geringerer Druckdifferenz und somit höheren Trübungswerten filtriert wird, welche jedoch weiterhin im akzeptablen Bereich liegen. Dadurch kann ein frühzeitiges Zusetzen des Filterkuchens durch abgefilterte Partikel verhindert werden, wodurch die Gesamtfilterleistung erhöht werden kann. Die Standzeit des Filters kann zudem durch den gezielten Einsatz einer Voranschwemmung mit kurzen Fasern und einer Zudosage von Fasern mit gröberer Struktur erzielt werden. Insbesondere handelt es sich bei den Fasern um Viskosefasern. Weitere Verbesserungen lassen sich mit der oben beschriebenen Rückführung eines Teils des Filtrats sowie den oben beschriebenen speziell ausgebildeten Filterkerzen erzielen.

Die beschriebenen Verfahren und Vorrichtungen zur Regelung der Porosität eines Filterkuchens über die Regelung der Druckdifferenz durch Anpassung eines Volumenstroms an Unfiltrat in Abhängigkeit von einer gemessenen Trübung im Filtrat gestatten es, eine konstante Filtratqualität auch bei Verwendung von kompressiblen Filterhilfsmitteln zu sichern. Außerdem lassen sich die Standzeit des Filters sowie die Filterleistung verbessern.

**Anschwemmfiltration mit einem Filterhilfsmittel**

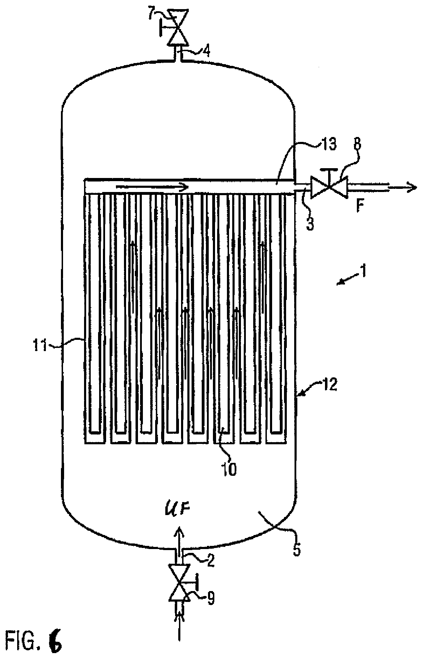

In Figur 6 wird ein Anschwemmkerzenfilter 1 gezeigt, in dem das erfindungsgemäße Filterhilfsmittel mit sowohl Viskosefasern als auch natürlichen Zellulosefasern eingesetzt werden kann. Der Anschwemmkerzenfilter 1 umfasst einen Filterkessel 12, der einen Unfiltratraum 5 aufweist. Filterkerzen 10 sind als Filterelement vertikal in dem Unfiltratraum 5 angeordnet. Die im Wesentlichen hohlzylindrischen Filterkerzen 10 weisen ein nicht näher gezeigtes hohlzylinderförmiges Filterkörper mit entsprechenden Fluiddurchlässen auf. Der Filterkörper kann beispielsweise aus einem spiralförmig gewundenen Draht bestehen.

Der Filterkessel 12 weist weiterhin einen Zulauf 2 für das Unfiltrat (UF) auf, wobei die Menge des Unfiltrats, beispielsweise über ein Regelventil 9 eingestellt werden kann. Weiter weist der Filterkessel einen Ablauf 4 für einen Teil des Unfiltrats aus dem Unfiltratraum 5 auf. Der Ablauf 4 für das Unfiltrat ist mengenmäßig über eine entsprechende Einrichtung, hier z. B. das Regelventil 7, regulierbar. Der Ablauf 4 kann insbesondere mithilfe einer nicht dargestellten BypassLeitung mit dem Zulauf 2 für das Unfiltrat verbunden sein. Der Prozess des Filtrierens/Stabilisierens mithilfe des Anschwemmkerzenfilters 1 kann in Form eines Unfiltratkreislaufprozesses erfolgen. Hierbei kann ein Kreislauf von Unfiltrat über den unteren Zulauf 2, den Filterkessel 12 und den oberen Ablauf 4 mithilfe einer (nicht gezeigten) Pumpeinrichtung erzeugt werden. Als Ergebnis liegt im Unfiltratraum 5 eine nach oben gerichtete Unfiltratströmung vor, welche zu einer gleichmäßigeren Anschwemmung des Filterhilfsmittels 11 führt.

Es kann vorteilhaft sein, den Ablauf 4 auch als Zulauf 4 für Unfiltrat zu verwenden, so dass zumindest zeitweise sowohl über den unteren Zulauf 2 als auch über den oberen Zulauf 4 Unfiltrat zugeführt werden kann. Alternativ kann der Strom von Unfiltrat zeitweise ausschließlich über den oberen Zulauf 4, insbesondere abwechselnd über den unteren und oberen Zulauf, zugeführt werden. Mit einer Zufuhr von Unfiltrat zumindest zeitweise über den oberen Zulauf 4 und unteren Zulauf 2 lässt sich ebenfalls, wie mit dem Unfiltratkreislaufprozess, eine gleichmäßigere Anschwemmung der Anschwemmschicht erreichen. Dabei kann optional das Verhältnis der Volumenströme von Unfiltrat, zum Beispiel mittels eines Drei-Wege-Ventils, eingestellt werden. Wenn Unfiltrat zeitgleich über den unteren Zulauf 2 und oberen Zulauf 4 zugeführt wird so kann das Verhältnis des Volumenstrom beispielsweise 1:1 oder 1:2 oder bis zu 2:1 (Zulauf oben : Zulauf unten), betragen.

Die Filterkerzen 10 münden in ein Register 13, über welches das Filtrat (F) aus den Filterkerzen 10 abgeleitet werden kann. Dabei werden die Filterelemente (hier Filterkerzen 10) über Rohrsysteme in einer oder mehreren Gruppen (Registersammelrohren) zusammengefasst, so dass ein Filtrat jeder Gruppe separat abgeführt werden kann und in den Ablauf 3 zusammengeführt werden kann. Das Register 13 stellt somit den Ablauf 3 für das Filtrat zur Verfügung, wobei die Ablaufmenge über eine Einrichtung, wie z. B. das Regelventil 8 eingestellt werden kann.

Im Betrieb des Anschwemmkerzenfilters 1 wird Unfiltrat über den Zulauf 2 in den Unfiltratraum 5 eingeleitet, wobei dem Unfiltrat ein Filterhilfsmittel mit Zellulosefasern und Viskosefasern zugesetzt wurde (nicht dargestellt). Der Filterkuchen 11 wird während der Filtration durch Zugabe von Filterhilfsmittel permanent aufrecht erhalten (laufende Dosage). Vor der eigentlichen Filtration bzw. Stabilisierung kann die Grundanschwemmung auch insbesondere mit entgastem Wasser oder filtriertem Bier zum Aufbau einer Anschwemmschicht erfolgen. Dadurch, dass mit Hilfe des Ablaufs 4 eine definierte Unfiltratströmung in Richtung des Ablaufs 4 erzeugt wird, wie es durch die Pfeile in Figur 6 dargestellt ist, wird eine gleichmäßige Anschwemmung des Filterhilfsmittels mit Zellulosefasern und Viskosefasern erreicht. Natürlich können auch mehrere Abläufe über den Umfang verteilt vorhanden sein, die dann beispielsweise in eine gemeinsame Sammelleitung münden. Dadurch wird die Gleichmäßigkeit der Strömung weiter verbessert.

Das nicht über den Ablauf 4 ausgeleitete Unfiltrat tritt durch die Fluiddurchlässe der Filterkerzen 10 in die Filterkerzen 10 ein, nachdem es durch den Filterkuchen 11 filtriert wurde. Es gelangt dann durch die Filterkerzen 10 nach oben in ein Register 13, von wo es dann über den Ablauf 3 abfließen kann. Alternativ zu einem Register wäre auch eine Zuführung in einen Filtratraum denkbar, von wo es dann dem Ablauf 3 zugeführt wird.

Erfindungsgemäß wird ein Filterhilfsmittel 11 für den Anschwemmfilter verwendet, das sowohl Viskosefasern als auch Zellulosefasern umfasst oder aus diesen beiden Faserarten zumindest zu 90% oder 95 % oder 98 % oder im Wesentlichen (bis auf Verunreinigungen) vollständig besteht. Die Viskosefasern sind von natürlichen Zellstofffasern und Zellulosefasern zu unterscheiden und werden durch gezielte Modifikation der natürlichen Zellulose erzeugt. Die Viskosefasern können durch bekannte Viskoseverfahren gesponnen worden sein. Die Viskosefasern können bis auf Unreinheiten, beispielsweise geringste Mengen an Hemizellulosen und Restlignin, vollständig aus Zellulose bestehen. Somit können die Viskosefasern über 98 %, insbesondere über 99 % bzw. über 99,5 %, Zellulose, insbesondere a -Zellulose, enthalten. Die Viskosefasern können einen Titer im Bereich von 0,1 bis 30 dtex aufweisen.

Die besondere Abgrenzung von Viskosefasern zu natürlichen Zellulosefasern ist wie folgt beschreibbar: Viskosefasern bestehen, wie natürliche Zellulosefasern zu 100 % aus Zellulose. Viskosefasern werden aus speziellen Zellstoffen (d. h. Zellstofffasern) hergestellt. Hierzu wird die Zellulose des Zellstoffs durch einen chemischen Prozess (Xanthogenat-Verfahren) in eine in Natronlauge lösliche Form überführt. Die gelöste Zellulose wird schließlich durch definierte Düsen (Spinnlöcher bzw. -kanäle) in ein Fällbad ausgesponnen. Es entsteht je Düsenloch ein endloser Zellulosefaden, der anschließend gestreckt, gewaschen, nachbehandelt, geschnitten und bei Bedarf getrocknet werden kann. Dadurch bestehen folgende Steuerungsmöglichkeiten der Fasereigenschaften direkt im Spinnprozess:

(1) Definierte Einstellung des Faserdurchmessers.
(2) Definierte Einstellung der Faserlänge.
(3) Definierte Einstellung verschiedener Querschnittsformen.
(4) Definierte Einstellung der Oberflächenstruktur.
(5) Additivierung der Spinnmasse, so dass Additive homogen über den Querschnitt der Faser eingelagert werden können.

Diese fünf Steuerungsmöglichkeiten sind bei natürlichen Zellulosefasern nicht möglich. Viskosefasern können hingegen aus dem natürlichen Makromolekül ("Polymer") Zellulose extrem vielfältig maßgeschneidert und funktionalisiert werden.

Filterhilfsmittel mit Zellulosefasern und Viskosefasern können auch für Anschwemmfilter verwendet werden, in denen Anschwemmschichten an gitterförmigen Filterböden gebildet werden. Ein Anschwemmfilter kann eine Mehrzahl an Gitterböden als Filterkörper umfassen, deren Gitteröffnungen unterschiedlich dimensioniert sein können. Insbesondere können die Filtermittel mehrere übereinander in horizontaler Lage angeordnete Scheiben gleicher Form sein. Ein sich so ergebender Filter wird allgemein als Horizontalfilter bezeichnet.

Es wurden ausführliche Versuche zur Bierfiltration/-stabilisierung durchgeführt, um optimierte Parameterbereiche für die Filtrierung/Stabilisierung von Bier zu ermitteln. Hierbei ist insbesondere darauf zu achten, dass eine Verblockung des Filterkuchens vermieden wird und eine gewünschte Trübung des filtrierten Bieres stabil erreicht werden kann beziehungsweise nicht überschritten wird. Die Zellulosefasern und Viskosefasern des Filterhilfsmittels 11 zeichnen sich hierbei durch unterschiedliche Eigenschaften aus. Die Zellulose ist weicher und "fluffiger" als die Viskose und macht dadurch den Filterkuchen kompressibler. Geschwindigkeitsveränderungen erzielen eine größere Änderung der Porosität als im Vergleich zur Viskose. Der Fluss geht daher stark zurück, wenn die Beladung mit Schmutzfracht zu groß wird. Jedoch ist die leicht komprimierbare Zellulosefaser für eine relativ geringe Trübung verantwortlich. Viskosefasern sind aufgrund ihrer kompakten gesponnenen Form fester als natürliche Zellulosefasern und haben eine vergleichsweise geringere Kompressibilität. Sie dämpfen den Kuchen ab, tendieren aber dazu, zu schnell auf (zufällige) Schwankungen zu reagieren und können dadurch eine sehr anfällige Filterstruktur verursachen. Die Viskosefasern verhindern die übermäßige Kompression der Zellulosefasern und halten dadurch die Fließgeschwindigkeit hoch. Die gemeinsame Bewirkung charakteristischer Eigenschaften des Filterkuchens durch die Zellulosefasern und Viskosefasern kann in mechanischer Analogie den Dämpfungs- und Schwingungseigenschaften zweier gekoppelter mechanischer Federn entsprechen.

Im weiteren werden konkrete Parameterbereiche angegeben, für die eine Filtrierung/Stabilisierung von Bier gewünschte Ergebnisse insbesondere hinsichtlich der Filterleistung und -standzeit und resultierenden Trübung des Bieres erbrachte. Mischungen von Viskosefasern und Zellulosefasern als Filterhilfsmittel, die stabile und reproduzierbare Filtrationsergebnisse an Anschwemmfiltern in einer Brauerei aufweisen, die das Erreichen der Filtrationsqualität (insbesondere die gewünschte Trübung) gemäß den Anforderungen ermöglichen, weisen beispielsweise 60 % bis 95 %, insbesondere 75 % bis 85 %, Zellulosefasern und den Rest Viskosefasern auf, wobei die Zellulosefasern herkömmlich erhältliche Zellulosefasern sind, die eine durchschnittliche Faserlänge von weniger als 25 $\mu$m, insbesondere

von zwischen 15 μm und 25 μm, aufweisen, und die Viskosefasern eine durchschnittliche Faserlänge von zwischen 50 μm und 300 μm aufweisen. Als Viskosefasern können Microfine® mit einer Faserlänge von 50 μm und/oder Galaxy® mit einer Faserlänge von 300 μm Verwendung finden.

Eine Filtrierung oder Stabilisation von Bier mit dem Filterhilfsmittel 11, das sowohl Zellulosefasern als auch Viskosefasern umfasst oder aus diesen beiden Faserarten besteht kann einen Anschwemmvorgang (Grundanschwemmung) umfassen. Das Filterhilfsmittel 11 wird bei Beginn des Filtrationsvorgangs an der Außenfläche der Filterkerze 10 angeschwemmt, sodass eine Anschwemmschicht ausgebildet wird. Die Filterkerze 10 kann in dem in Figur 6 gezeigten Beispiel eine Filterfläche von etwa 0,1 m² aufweisen. Während des Filtrationsvorgangs wird dem zu filtrierenden beziehungsweise zu stabilisierenden Bier regelmäßig bzw. kontinuierlich Filterhilfsmittel zudosiert (laufende Dosage). Die Standzeit des Filters kann durch den gezielten Einsatz einer Grundanschwemmung mit relativ kurzen Viskosefasern und einer Zudosage von Viskosefasern mit gröberer Struktur verbessert werden. Die Grundanschwemmmenge kann insgesamt (für eine Filterkerze oder pro mehrere, etwa dreissig bis vierhundert, Filterkerzen 10) bei zwischen 500 g/m² und 2100 g/m² liegen. Für typische Hefezellenzahlen des Unfiltrats kann so eine gewünschte Trübung erreicht werden. Eine Zudosage während der laufenden Dosage von Filterhilfsmittel kann beispielsweise zwischen 40 bis 150 g/hl liegen. In einer ersten Phase der Grundanschwemmung kann eine Anschwemmung mit weniger als 1000 g/m² (beispielsweise 700 g/m²) erfolgen. In einer nachfolgenden zweiten Phase der Grundanschwemmung kann eine Anschwemmung mit mehr als 1000 g/m² (beispielsweise 1100 g/m²) erfolgen. Ein Zudosage kann mit einer Menge des Filterhilfsmittels 11 von mehr als 40 g/hl oder mehr als 100 g/hl erfolgen.

Sehr gute Ergebnisse konnten mit einem Anteil des Zellulosefasern von mehr als 70 % und weniger als 95 %, insbesondere im Bereich von 75 % bis 85 %, (sowohl während des Anschwemmvorgangs als auch während der laufenden Dosage) erreicht werden, wobei eine durchschnittliche Faserlänge der Zellulosefasern zwischen 15 μm und 20 μm, beispielsweise 18 bis 20 μm lag, und eine durchschnittliche Faserlänge der Viskosefasern zwischen 50 μm und 300 μm lag (sowohl während des Anschwemmvorgangs als auch während der laufenden Dosage). So kann einerseits eine gewünschte niedrige Trübung des filtrierten Bieres erreicht werden und andererseits eine schnelle Verblockung des Filters verhindert werden. Bei einem Anteil von Zellulosefasern oberhalb von 95 % besteht die Gefahr der Ausbildung eines zu kompakten Filterkuchens. Wenn im Verlauf der Filtrierung/Stabilisierung eine zu große Komprimierung des Filterkuchen droht, kann der Anteil an Viskosefasern mit größerer durchschnittlicher Faserlänge gegenüber dem Anteil von Viskosefasern mit kleinerer durchschnittlicher Faserlänge erhöht werden; so kann die durchschnittliche Faserlänge der Viskose von unter 100 μm oder unter 150 μm auf über 150 μm oder über 200 μm gesteigert werden. Die Zugabe eines Filterhilfsmittels mit relativ großer durchschnittlicher Faserlänge führt zu einer Auflockerung des Filterkuchens. Allgemein kann ein Filterhilfsmittel mit einer Mischung aus Viskosefasern unterschiedlicher Faserlängen zu kompakteren Filterkuchen und entsprechend geringeren Trübungen als ein Filterhilfsmittel mit Viskosefasern einer einzigen Länge führen. Wenn andererseits die erreichte Trübung des filtrierten Bieres größer als gewünscht wird, kann die Zudosagemenge erhöht werden oder die Fließgeschwindigkeit durch den erhöht werden.

Mit den oben genannten Parametern lässt sich eine zufriedenstellende Filtration/Stabilisierung von Bier erreichen. Im Rahmen der oben und im Folgenden beschriebenen Parameter kann der Fachmann, je nach der sich im konkreten Anwendungsfall stellenden Aufgaben, durch Standardexperimente die jeweils optimale Mischung von Zellulosefasern und Viskosefasern bestimmen. Es hat sich gezeigt, dass eine Optimierung des Filtrationsvorgangs in Abhängigkeit von der Zahl der Hefezellen des zu filtrierenden beziehungsweise zu stabilisierenden Bieres erreicht werden kann. So kann eine erwünschte Trübung bei einer durchschnittlichen Faserlänge der Zellulosefasern von weniger als 25 μm, insbesondere weniger als 20 μm und mehr als 16 μm, für eine Zahl an Hefezellen im Unfiltrat von weniger als 5 Millionen Hefezellen pro Milliliter mit Viskosefasern im Filterhilfsmittel mit einer durchschnittlichen Faserlänge von weniger als 75 μm und für eine Zahl an Hefezellen im Unfiltrat von mehr als 7 Millionen Hefezellen pro Milliliter mit Viskosefasern im Filterhilfsmittel mit einer durchschnittlichen Faserlänge von mehr als 150 μm erreicht werden. Beispielsweise kann als Filterhilfsmittel geeigneter Weise eine Mischung einerseits aus einer Mischung von Zellulosefasern mit einer Faserlänge von 18 μm und mit einer Faserlänge von 20 μm und andererseits einer Mischung von Viskosefasern mit einer Faserlänge von 50 μm und mit einer Faserlänge von 300 μm (beispielsweise Microfine® und Galaxy®) für eine Zahl an Hefezellen im Unfiltrat von mehr als 7 Millionen Hefezellen pro Milliliter und bis zu mehr als 20 Millionen Hefezellen pro Milliliter gewählt werden. Beispielsweise kann als Filterhilfsmittel geeigneter Weise eine Mischung einerseits aus einer Mischung von Zellulosefasern mit einer Faserlänge von 18 μm und mit einer Faserlänge von 20 μm und andererseits von Viskosefasern mit einer Faserlänge von 50 μm (beispielsweise Microfine®) für eine Zahl an Hefezellen im Unfiltrat von weniger als 5 Millionen Hefezellen pro Milliliter gewählt werden.

**Patentansprüche**

1. Verfahren zur Regelung der Porosität eines Filterkuchens eines Anschwemmfilters, der mindestens einen Zulauf (114a-b) für Unfiltrat und mindestens einen Ablauf (118) für Filtrat aufweist, umfassend die Schritte:

Zufuhr eines Stroms von mit Filterhilfsmittel versetztem Unfiltrat über den Zulauf (114a-b) des Anschwemmfilters; und
Abzug eines Stroms von Filtrat von dem Ablauf (118) des Anschwemmfilters;
wobei eine Trübung des abgezogenen Filtrats gemessen und mittels einer Steuereinheit (130) mit mindestens einem Grenzwert für die Trübung verglichen wird;

**dadurch gekennzeichnet, dass**

eine Druckdifferenz zwischen Unfiltratseite und Filtratseite des Anschwemmfilters durch Anpassen eines Volumenstroms des zugeführten Stroms mittels der Steuereinheit (130) in Abhängigkeit von einem Ergebnis des Vergleichs der gemessenen Trübung mit dem mindestens einen Grenzwert geregelt wird;
wobei die Steuereinheit (130) einen Sollwert für die Druckdifferenz erhöht, wenn die gemessene Trübung über einem oberen Grenzwert liegt;
wobei die Steuereinheit (130) den Sollwert für die Druckdifferenz reduziert, wenn die gemessene Trübung unter einem unteren Grenzwert liegt;
wobei die Regelung der Druckdifferenz zumindest teilweise, insbesondere vollständig, durch Rückführen von Filtrat zum Zulauf (114a-b) des Anschwemmfilters erfolgt.

2. Verfahren nach Anspruch 1, wobei das Filterhilfsmittel ein kompressibles Filterhilfsmittel ist und insbesondere Viskose und/oder Zellulose umfasst oder aus Viskose und/oder Zellulose besteht.

3. Verfahren nach Anspruch 1 oder 2, wobei der Volumenstrom mittels der Steuereinheit (130) derart angepasst wird, dass eine Druckdifferenz zwischen Unfiltratseite und Filtratseite des Anschwemmfilters größer oder gleich einem von Null verschiedenen unteren Grenzwert ist.

4. Verfahren nach Anspruch 1, wobei die Regelung der Druckdifferenz solange durch vollständiges Rückführen des Filtrats erfolgt, bis die gemessene Trübung unter dem oberen Grenzwert liegt.

5. Verfahren nach einem der vorhergehenden Ansprüche, wobei der Anschwemmfilter weiterhin einen Filterkessel (110) mit einem Unfiltratraum (112), eine Vielzahl von in dem Unfiltratraum angeordneten Filterelementen (116), insbesondere Filterkerzen, und wenigstens einen oberen und einen unteren Zulauf (114a-b) für Unfiltrat umfasst, und
wobei der Strom von mit Filterhilfsmittel versetztem Unfiltrat zumindest zeitweise sowohl über den unteren (114b) als auch über den oberen Zulauf (114a) oder zeitweise ausschließlich über den oberen Zulauf (114a) zugeführt wird.

6. Verfahren nach einem der Ansprüche 1 bis 5, wobei eine Erhöhung des Volumenstroms des zugeführten Stroms nur erfolgt, solange die Druckdifferenz unter einem maximalen Druckwert liegt.

7. Anschwemmfiltersystem zur Filtration und/oder Stabilisierung von Fluiden, insbesondere von Bier, umfassend:

einen Filterkessel (110) mit mindestens einem Zulauf (114a-b) für Unfiltrat;
einen Unfiltratraum (112);
mehrere in dem Unfiltratraum angeordnete Filterelemente (116);
mindestens einen Ablauf (118) für Filtrat; und
eine Messvorrichtung (120), die dazu ausgebildet ist, eine Trübung des Filtrats zu messen; **gekennzeichnet durch**
eine Steuereinheit (130), die dazu ausgebildet ist, die gemessene Trübung mit mindestens einem Grenzwert für die Trübung zu vergleichen und eine Druckdifferenz zwischen Unfiltratseite und Filtratseite des Anschwemmfiltersystems durch Anpassen eines Volumenstroms eines über den Zulauf (114a-b) zugeführten Stroms von mit Filterhilfsmittel, insbesondere einem kompressiblen Filterhilfsmittel, versetztem Unfiltrat in Abhängigkeit von einem Ergebnis des Vergleichs der gemessenen Trübung mit dem mindestens einen Grenzwert zu regeln;
wobei die Steuereinheit (130) ausgebildet ist, einen Sollwert für die Druckdifferenz zu erhöhen, wenn die gemessene Trübung über einem oberen Grenzwert liegt;
wobei die Steuereinheit (130) ausgebildet ist, den Sollwert für die Druckdifferenz zu reduzieren, wenn die gemessene Trübung unter einem unteren Grenzwert liegt;
wobei die Steuereinheit (130) ausgebildet ist, die Druckdifferenz zumindest teilweise, insbesondere vollständig, durch Rückführen von Filtrat zum Zulauf (114a-b) des Anschwemmfilters zu regeln.

8. Anschwemmfiltersystem nach Anspruch 7, weiterhin eine regelbare Pumpe (164) im Zulauf umfassend, wobei die Steuereinrichtung (130) dazu ausgebildet ist, eine Pumpleistung der Pumpe (164) zu erhöhen, wenn die gemessene Trübung über einem oberen Grenzwert liegt.

9. Anschwemmfiltersystem nach Anspruch 8, weiterhin eine Rückführleitung (170) für Filtrat zum Zulauf und ein regelbares Ventil (174) umfassend, das derart ausgebildet ist, dass zumindest ein Teil des Filtrats über die Rückführleitung (170) zum Zulauf zurückgeführt werden kann; und wobei die Steuereinheit (130) weiterhin dazu ausgebildet ist, einen Volumenstrom des rückgeführten Filtrats zu erhöhen, wenn die gemessene Trübung über dem oberen Grenzwert liegt.

10. Anschwemmfiltersystem nach einem der Ansprüche 7 bis 9, wobei der Filterkessel (110) wenigstens einen oberen und einen unteren Zulauf (114a-b) für Unfiltrat aufweist, und wobei die Steuereinheit (130) weiterhin derart ausgebildet ist, dass der Strom von mit Filterhilfsmittel versetztem Unfiltrat zumindest zeitweise sowohl über den unteren (114b) als auch über den oberen Zulauf (114a) oder zeitweise ausschließlich über den oberen Zulauf (114a) zugeführt wird.

11. Anschwemmfiltersystem nach einem der Ansprüche 7 bis 10, wobei die Filterelemente (116) Filterkerzen sind, die jeweils einen Filterkörper (480), einen im Innenraum des Filterkörpers (480) angeordneten Innenkörper (484) und wenigstens einen zwischen dem Filterkörper (480) und dem Innenkörper (484) gebildeten Filtratkanal (486) aufweisen; und wobei der Innenkörper (484) im Wesentlichen rohrförmig ausgebildet ist und wenigstens einen Filtratablauf (492) aufweist und weiterhin an wenigstens zwei Stellen entlang seiner Längsachse umfänglich angeordnete Öffnungen (494a-c) aufweist, die derart ausgebildet sind, dass Filtrat von dem Filtratkanal (486) in einen Innenraum (485) des Innenkörpers (484) eintreten kann.

12. Verfahren zum Filtrieren oder Stabilisieren von Bier mit den Schritten:

Bereitstellen eines Anschwemmfilters (1), insbesondere eines Anschwemmkerzenfilters (1); Anschwemmen eines Filterhilfsmittels (11) gemäß einem der Ansprüche 1 bis 3 an ein Filterelement (10) des Anschwemmfilters (1) zum Bilden einer Filterschicht; und Leiten des Bieres durch die gebildete Filterschicht.

13. Verfahren gemäß Anspruch 12, weiterhin mit dem Schritt des Grundanschwemmens des Filterhilfsmittels (11) mit einer Menge von 500 g/m$^2$ bis 2100 g/m$^2$, insbesondere 1700 g/m$^2$ bis 1900 g/m$^2$.

14. Verfahren gemäß Anspruch 12 oder 13, in dem eine Fließgeschwindigkeit durch die Filterschicht von oberhalb 5 hl/(m$^2$h), insbesondere oberhalb von 10 hl/(m$^2$h), insbesondere zwischen 10 hl/(m$^2$h) und 30 hl/(m$^2$h), liegt und insbesondere als Startbedingung zu Beginn der Filtration diese oberhalb von 180 hl/(m$^2$h), insbesondere oberhalb von 200 hl/(m$^2$h), insbesondere zwischen 200 hl/(m$^2$h) und 260 hl/(m$^2$h) und weiterhin insbesondere zwischen 220 hl/(m$^2$h) und 240 hl/(m$^2$h) gewählt wird.

15. Verfahren gemäß Anspruch 12, 13 oder 14, in dem ein Teil eines durch die Filtration gewonnenen Filtrats einem Volumenstrom des zu filtrierenden oder stabilisierenden Bieres wieder zugeführt wird.

16. Verfahren gemäß einem der Ansprüche 12 bis 15, in dem die Wahl der Mischung der Viskosefasern und Zellulosefasern in Abhängigkeit von der Anzahl der Hefezellen des zu filtrierenden oder stabilisierenden Bieres erfolgt.

17. Verfahren gemäß Anspruch 16, in dem a) das zu filtrierende oder zu stabilisierende Bier weniger als 5 Millionen Hefezellen pro Milliliter aufweist und die Viskosefasern eine durchschnittliche Faserlänge von weniger als 100 μm aufweisen; oder b) das zu filtrierende oder zu stabilisierende Bier mehr als 7 Millionen Hefezellen pro Milliliter aufweist und die Viskosefasern eine durchschnittliche Faserlänge von mehr als 200 μm aufweisen.

18. Verfahren gemäß Anspruch 16 oder 17, in dem die Zellulosefasern eine durchschnittliche Faserlänge von 15 bis 20 μm aufweisen und/oder der Anteil der Zellulosefasern 75 % bis 85 % beträgt.

19. Verfahren gemäß einem der Ansprüche 12 bis 18, mit einer ersten Filtrationsphase, in der ein Filterhilfsmittel (11) mit einer durchschnittlichen Faserlänge der Viskosefasern von weniger als 100 μm verwendet wird, und einer auf die erste Filtrationsphase folgenden zweiten Filtrationsphase, in der ein Filterhilfsmittel (11) mit einer durchschnittlichen Faserlänge der Viskosefasern von mehr als 200 μm verwendet wird.

**Claims**

1. Method for regulating the porosity of a filter cake of a precoat filter which has at least one inlet (114a-b) for non-filtrate and at least one outlet (118) for filtrate, comprising the steps of:

feeding in a flow of non-filtrate mixed with filter aid via the inlet (114a-b) of the precoat filter; and removing a flow of filtrate from the outlet (118) of the precoat filter; a turbidity of the removed filtrate being measured and compared with at least one threshold value for the turbidity by means of a control unit (130);

**characterised in that**

a pressure difference between the non-filtrate side and the filtrate side of the precoat filter is regulated by adjusting a volumetric flow rate of the fed-in flow by means of the control unit (130) on the basis of a result of the comparison of the measured turbidity with the at least one threshold value;
the control unit (130) increasing a setpoint value for the pressure difference if the measured turbidity is above an upper threshold value;
the control unit (130) reducing the setpoint value for the pressure difference if the measured turbidity is below a lower threshold value; and
the regulation of the pressure difference being carried out at least partially, in particular completely, by returning the filtrate to the inlet (114a-b) of the precoat filter.

2. Method according to claim 1, wherein the filter aid is a compressible filter aid and in particular comprises viscose and/or cellulose or consists of viscose and/or cellulose.

3. Method according to either claim 1 or claim 2, wherein the volumetric flow rate is adjusted by means of the control unit (130) in such a way that a pressure difference between the non-filtrate side and the filtrate side of the precoat filter is greater than or equal to a lower threshold value other than zero.

4. Method according to claim 1, wherein the pressure difference is regulated by completely returning the filtrate until the measured turbidity is below the upper threshold value.

5. Method according to any of the preceding claims, wherein the precoat filter further comprises a filter vessel (110) having a non-filtrate chamber (112), a large number of filter elements (116), in particular filter candles, arranged in the non-filtrate chamber, and at least one upper and one lower inlet (114a-b) for non-filtrate, and
wherein the flow of non-filtrate mixed with filter aid is fed in at least intermittently both via the lower (114b) and via the upper inlet (114a) or intermittently exclusively via the upper inlet (114a).

6. Method according to any of claims 1 to 5, wherein the volumetric flow rate of the fed-in flow is increased only for as long as the pressure difference is below a maximum pressure value.

7. Precoat filter system for filtering and/or stabilising fluids, in particular beer, comprising:

a filter vessel (110) having at least one inlet (114a-b) for non-filtrate; a non-filtrate chamber (112);
a plurality of filter elements (116) arranged in the non-filtrate chamber;
at least one outlet (118) for filtrate; and
a measuring device (120) designed to measure a turbidity of the filtrate;

**characterised by**

a control unit (130) which is designed to compare the measured turbidity with at least one threshold value for the turbidity and regulate a pressure difference between the non-filtrate side and the filtrate side of the precoat filter system by adapting a volumetric flow rate of a flow that is fed in via the inlet (114a-b) and consists of non-filtrate mixed with filter aid, in particular a compressible filter aid, on the basis of a result of the comparison of the measured turbidity with the at least one threshold value;
the control unit (130) being designed to increase a setpoint value for the pressure difference if the measured turbidity is above an upper threshold value;
the control unit (130) being designed to reduce the setpoint value for the pressure difference if the measured turbidity is below a lower threshold value; and
the control unit (130) being designed to regulate the pressure difference at least partially, in particular completely, by returning filtrate to the inlet (114a-b) of the precoat filter.

8. Precoat filter system according to claim 7, further comprising a regulable pump (164) in the inlet, wherein the control apparatus (130) is designed to increase a pump power of the pump (164) when the measured turbidity is above an upper threshold value.

9. Precoat filter system according to claim 8, further comprising a return line (170) for filtrate to the inlet and a regulable valve (174) which is designed such that at least part of the filtrate can be returned to the inlet via the return line (170); and wherein the control unit (130) is further designed to increase a volumetric flow rate of the returned filtrate if the measured turbidity is above the upper threshold value.

10. Precoat filter system according to any of claims 7 to 9, wherein the filter vessel (110) has at least one upper and one lower inlet (114a-b) for non-filtrate, and wherein the control unit (130) is further designed in such a way that the flow of non-filtrate mixed with filter aid is fed in at least intermittently both via the lower (114b) and via the upper inlet (114a) or intermittently via the upper inlet (114a).

11. Precoat filter system according to any of claims 7 to 10, wherein the filter elements (116) are filter candles which each have a filter body (480), an inner body (484) arranged in the interior of the filter body (480) and at least one filtrate channel (486) formed between the filter body (480) and the inner body (484); and
wherein the inner body (484) is substantially tubular and has at least one filtrate outlet (492) and openings (494a-c) arranged circumferentially at at least two points along its longitudinal axis, which openings are designed in such a way that filtrate from the filtrate channel (486) can enter an interior (485) of the inner body (484).

12. Method for filtering or stabilising beer, comprising the steps of:

    providing a precoat filter (1), in particular a precoat candle filter (1);
    precoating a filter aid (11) according to any of claims 1 to 3 on a filter element (10) of the precoat filter (1) to form a filter layer; and
    passing the beer through the filter layer formed.

13. Method according to claim 12, further comprising the step of providing the filter aid (11) with a base precoat using an amount of 500 g/m$^2$ to 2100 g/m$^2$, in particular 1700 g/m$^2$ to 1900 g/m$^2$.

14. Method according to either claim 12 or claim 13, in which a flow rate through the filter layer is above 5 hl/(m$^2$h), in particular above 10 hl/(m$^2$h), in particular between 10 hl/(m$^2$h) and 30 hl/(m$^2$h), and in particular as a starting condition at the beginning of the filtration process is selected so as to be above 180 hl/(m$^2$h), in particular above 200 hl/(m$^2$h), in particular between 200 hl/(m$^2$h) and 260 hl/(m$^2$h), and more particularly between 220 hl/(m$^2$h) and 240 hl/(m$^2$h).

15. Method according to claim 12, 13 or 14, in which part of a filtrate obtained by the filtration process is fed back into a volumetric flow of the beer to be filtered or stabilised.

16. Method according to any of claims 12 to 15, in which the mixture of viscose fibres and cellulose fibres is selected on the basis of the number of yeast cells in the beer to be filtered or stabilised.

17. Method according to claim 16, in which a) the beer to be filtered or stabilised has less than 5 million yeast cells per millilitre and the viscose fibres have an average fibre length of less than 100 μm; or b) the beer to be filtered or stabilised has more than 7 million yeast cells per millilitre and the viscose fibres have an average fibre length of more than 200 μm.

18. Method according to either claim 16 or claim 17, in which the cellulose fibres have an average fibre length of from 15 to 20 μm and/or the proportion of cellulose fibres is from 75% to 85%.

19. Method according to any of claims 12 to 18, comprising a first filtration phase, in which a filter aid (11) having an average viscose fibre length of less than 100 μm is used, and a second filtration phase, which follows the first filtration phase and in which a filter aid (11) having an average viscose fibre length of more than 200 μm is used.

**Revendications**

1. Procédé de régulation de la porosité d'un tourteau de produit de filtration d'un filtre à précouche présentant au moins une entrée (114a à b) pour un produit non filtré et au moins une sortie (118) pour un produit filtré, comprenant les étapes consistant à :

    acheminer un flux de produit non filtré mélangé à un adjuvant de filtration par l'intermédiaire de l'entrée (114a à b) du filtre à précouche ; et
    évacuer, par la sortie (118) du filtre à précouche, un flux de produit filtré ;
    dans lequel une turbidité du produit filtré évacué est mesurée et comparée à au moins une valeur limite de turbidité au moyen d'une unité de commande (130) ;

    **caractérisé en ce que**

    une différence de pression entre le côté produit non filtré et le côté produit filtré du filtre à précouche est régulée au moyen de l'unité de commande (130) par adaptation d'un débit volumique du flux acheminé en fonction d'un résultat de la comparaison entre la turbidité mesurée et la au moins une valeur limite ;
    dans lequel l'unité de commande (130) augmente une valeur souhaitée pour la différence de pression lorsque la turbidité mesurée est supérieure à une valeur limite supérieure ;
    dans lequel l'unité de commande (130) réduit la valeur souhaitée pour la différence de pression lorsque la turbidité mesurée est inférieure à une valeur limite inférieure ;
    dans lequel la régulation de la différence de pression intervient au moins partiellement, en particulier complètement, grâce au recyclage du produit filtré vers l'entrée (114a à b) du filtre à précouche.

2. Procédé selon la revendication 1, dans lequel l'adjuvant de filtration est un adjuvant de filtration compressible et comprend en particulier de la viscose et/ou de la cellulose ou est constitué de viscose et/ou de cellulose.

3. Procédé selon la revendication 1 ou 2, dans lequel le débit volumique est adapté au moyen de l'unité de commande (130) de telle manière qu'une différence de pression entre le côté produit non filtré et le côté produit filtré du filtre à précouche est supérieure ou égale à une valeur limite inférieure différente de zéro.

4. Procédé selon la revendication 1, dans lequel la régulation de la différence de pression intervient grâce au recyclage complet du produit filtré jusqu'à ce que la turbidité mesurée soit inférieure à la valeur limite supérieure.

5. Procédé selon l'une quelconque des revendications précédentes, dans lequel le filtre à précouche comprend en outre un réservoir filtrant (110) avec une chambre pour produit non filtré (112), une pluralité d'éléments filtrants (116), en particulier des bougies filtrantes, agencés dans la chambre pour produit non filtré, et au moins une entrée supérieure et une entrée inférieure (114a à b) destinées au produit non filtré, et
dans lequel le flux de produit non filtré mélangé à l'adjuvant de filtration est acheminé au moins temporairement à la fois par l'entrée inférieure (114b) et par l'entrée supérieure (114a) ou temporairement exclusivement par l'entrée supérieure (114a).

6. Procédé selon l'une quelconque des revendications 1 à 5, dans lequel une augmentation du débit volumique du flux acheminé n'intervient que tant que la différence de pression est inférieure à une valeur de pression maximale.

7. Système de filtre à précouche permettant une filtration et/ou une stabilisation de fluides, en particulier de la bière, comprenant :

un réservoir filtrant (110) avec au moins une entrée (114a à b) destinée au produit non filtré ;
une chambre pour produit non filtré (112) ;
plusieurs éléments filtrants (116) agencés dans la chambre pour produit non filtré ;
au moins une sortie (118) destinée à du produit filtré ; et
un dispositif de mesure (120) conçu pour mesurer une turbidité du produit filtré ;

**caractérisé par**

une unité de commande (130) conçue pour comparer la turbidité mesurée avec au moins une valeur limite pour la turbidité et pour réguler une différence de pression entre le côté produit non filtré et le côté produit filtré du système de filtre à précouche grâce à une adaptation d'un débit volumique d'un flux, acheminé par l'entrée (114a à b), de produit non filtré mélangé avec un adjuvant de filtration, en particulier un adjuvant de filtration compressible, en fonction du résultat de la comparaison entre la turbidité mesurée et la au moins une valeur limite ;
dans lequel l'unité de commande (130) est conçue pour augmenter une valeur souhaitée pour la différence de pression lorsque la turbidité mesurée est supérieure à une valeur limite supérieure ;
dans lequel l'unité de commande (130) est conçue pour réduire la valeur souhaitée pour la différence de pression lorsque la turbidité mesurée est inférieure à une valeur limite inférieure ;
dans lequel l'unité de commande (130) est conçue pour réguler la différence de pression au moins partiellement, en particulier complètement, grâce au recyclage du produit filtré vers l'entrée (114a à b) du filtre à précouche.

8. Système de filtre à précouche selon la revendication 7, comprenant en outre une pompe régulable (164) au sein de l'entrée, dans lequel l'unité de commande (130) est conçue pour augmenter une puissance de pompage de la pompe (164) lorsque la turbidité mesurée est supérieure à une valeur limite supérieure.

9. Système de filtre à précouche selon la revendication 8, comprenant en outre une conduite de recyclage (170), destinée au produit filtré et menant vers l'entrée, et une vanne régulable (174) conçue de telle manière qu'au moins une partie du produit filtré peut être recyclé vers l'entrée en passant par la conduite de recyclage (170) ; et dans lequel l'unité de commande (130) est en outre conçue pour augmenter un débit volumique du produit filtré recyclé lorsque la turbidité mesurée est supérieure à la valeur limite supérieure.

10. Système de filtre à précouche selon l'une quelconque des revendications 7 à 9, dans lequel le réservoir filtrant (110) présente au moins une entrée supérieure et une entrée inférieure (114a à b) pour le produit non filtré, et dans lequel l'unité de commande (130) est en outre conçue de telle manière que le flux de produit non filtré mélangé à l'adjuvant de filtration est acheminé au moins temporairement à la fois par l'entrée inférieure (114b) et par l'entrée supérieure (114a) ou temporairement exclusivement par l'entrée supérieure (114a).

**11.** Système de filtre à précouche selon l'une quelconque des revendications 7 à 10, dans lequel les éléments filtrants (116) sont des bougies filtrantes qui présentent respectivement un corps de filtration (480), un corps intérieur (484) agencé à l'intérieur du corps de filtration (480) et au moins un canal à produit filtré (486) formé entre le corps de filtration (480) et le corps intérieur (484) ; et

dans lequel le corps intérieur (484) est essentiellement tubulaire et présente au moins une sortie de produit filtré (492) et présente en outre des orifices (494a à c) agencés de manière circonférentielle en au moins deux points le long de son axe longitudinal et conçus de telle manière que le produit filtré peut pénétrer dans un espace intérieur (485) du corps intérieur (484) par le canal à produit filtré (486).

**12.** Procédé de filtration ou de stabilisation de la bière, comprenant les étapes consistant à :

fournir un filtre à précouche (1), en particulier un filtre à bougies à précouche (1) ;

appliquer une précouche d'un adjuvant de filtration (11) selon l'une quelconque des revendications 1 à 3 au niveau d'un élément filtrant (10) du filtre à précouche (1) afin de former une couche filtrante ; et

passer la bière à travers la couche filtrante formée.

**13.** Procédé selon la revendication 12, comprenant en outre l'étape consistant à appliquer une précouche de base de l'adjuvant de filtration (11) dans une quantité comprise entre 500 g/m$^2$ et 2 100 g/m$^2$, en particulier comprise entre 1 700 g/m$^2$ et 1 900 g/m$^2$.

**14.** Procédé selon la revendication 12 ou 13, dans lequel une vitesse d'écoulement à travers la couche filtrante est supérieure à 5 hl/(m$^2$h), en particulier supérieure à 10 hl/(m$^2$h), en particulier comprise entre 10 hl/(m$^2$h) et 30 hl/(m$^2$h), et est choisie, en particulier en tant que condition de départ au début de la filtration, comme étant supérieure à 180 hl/(m$^2$h), en particulier supérieure à 200 hl/(m$^2$h), en particulier comprise entre 200 hl/(m$^2$h) et 260 hl/(m$^2$h), et en outre en particulier comprise entre 220 hl/(m$^2$h) et 240 hl/(m$^2$h).

**15.** Procédé selon la revendication 12, 13 ou 14, dans lequel une partie d'un produit filtré obtenu grâce à la filtration est acheminée à nouveau vers un débit volumique de la bière à filtrer ou à stabiliser.

**16.** Procédé selon l'une quelconque des revendications 12 à 15, dans lequel le choix du mélange des fibres de viscose et des fibres de cellulose intervient en fonction du nombre de cellules de levure de la bière à filtrer ou à stabiliser.

**17.** Procédé selon la revendication 16, dans lequel a) la bière à filtrer ou à stabiliser présente moins de 5 millions de cellules de levure par millilitre et les fibres de viscose présentent une longueur moyenne de fibre inférieure à 100 $\mu$m ; ou b) la bière à filtrer ou à stabiliser présente plus de 7 millions de cellules de levure par millilitre et les fibres de viscose présentent une longueur moyenne de fibre supérieure à 200 $\mu$m.

**18.** Procédé selon la revendication 16 ou 17, dans lequel les fibres de cellulose présentent une longueur moyenne de fibre comprise entre 15 et 20 $\mu$m et/ou la proportion des fibres de cellulose est comprise entre 75% et 85%.

**19.** Procédé selon l'une quelconque des revendications 12 à 18, comprenant une première phase de filtration dans laquelle un adjuvant de filtration (11) avec une longueur de fibre moyenne des fibres de viscose inférieure à 100 $\mu$m est utilisé, et une seconde phase de filtration, consécutive à la première phase de filtration, dans laquelle un adjuvant de filtration (11) avec une longueur de fibre moyenne des fibres de viscose supérieure à 200 $\mu$m est utilisé.

FIG. 1

300l/h

2300l/h

300l/h

FIG. 2

FIG. 3a

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1243302 B1
- DE 19804882 A1
- WO 2015036372 A1
- WO 2010083940 A1

- DE 1261110 B
- DE 19751180 C1
- EP 1243300 B1

**In der Beschreibung aufgeführte Nicht-Patentliteratur**

- **LUCKERT, K.** Handbuchs der mechanischen Fest-Flüssig-Trennung. Vulkan-Verlag, 2004, 160